# EUROPEAN PATENT APPLICATION

(11) **EP 4 780 082 A1**
(43) Date of publication of application: **22.07.2026**
(21) Application number: 24864165.6
(22) Date of filing: 18.06.2024
(51) Int. Cl.: H04W 48/20

(54) **INFORMATION PROCESSING METHOD AND APPARATUS, INFORMATION TRANSMISSION METHOD AND APPARATUS, AND COMMUNICATION DEVICE**

(30) Priority: 11.09.2023 CN 202311163169
(71) Applicant: Datang Mobile Communications Equipment Co., Ltd., Beijing 100085 (CN)
(72) Inventor: DUAN, Xiaoyan, Beijing 100085 (CN)
(74) Representative: Studio Torta S.p.A.
(86) International application number: PCT/CN2024/099751
(87) International publication number: WO 2025/055440

(57) **Abstract**

The present disclosure provides an information processing method and apparatus, information transmission method and apparatus, and communication device, and relates to the field of communication technologies. The information processing method is performed by a first network function and includes: obtaining first information of at least one data network access; wherein the first information includes at least one or more of the following: energy consumption information, which includes energy consumption information of a network or user equipment (UE) using the data network access, and energy efficiency information, which includes energy efficiency information of the network or UE using the data network access; determining data network access information for a protocol data unit (PDU) session according to the first information; and triggering establishment or modification of the PDU session based on the data network access information.

## Description

The present application is filed based on and claims the priority of Chinese Application No. 202311163169.4 filed on September 11, 2023, entitled "information processing method and apparatus, information transmission method and apparatus, and communication device", the disclosure of which are incorporated in their entireties by reference herein.

### TECHNICAL FIELD

The present disclosure relates to the field of communication technologies, and in particular, to an information processing method and apparatus, information transmission method and apparatus, and communication device.

### BACKGROUND

User Equipment (UE) can transmit data to an application server in a data network (DN) or receive data from the application server in the DN through a wireless mobile communication network. In different areas, different local networks can be deployed to access the same data network and provide the same application/service. In this way, when the UE is in a specific area, the network can select a local data network access for the UE to access the data network, so that the UE transmits data between the local network and a local application server, thereby reducing service latency, reducing core network load, and improving service experience. This scenario is also referred as edge computing.

However, when there are multiple local networks, how to select a data network access to reduce energy consumption of the network or UE and improve energy efficiency performance of the network or UE is an urgent problem to be solved.

### SUMMARY

Embodiments of the present disclosure provide an information processing method and apparatus, information transmission method and apparatus, and communication device, which can select an optimal data network access, thereby reducing the energy consumption of the network or UE, and improving the energy efficiency performance of the network or UE.

In order to solve the above technical problem, one embodiment of the present disclosure provides an information processing method, performed by a first network function, including:
obtaining first information of at least one data network access; wherein the first information includes at least one or more of the following: energy consumption information, which includes energy consumption information of a network or user equipment (UE) using the data network access, and energy efficiency information, which includes energy efficiency information of the network or UE using the data network access;
determining data network access information for a protocol data unit (PDU) session according to the first information; and
triggering establishment or modification of the PDU session based on the data network access information.

In some embodiments, the triggering establishment or modification of the PDU session based on the data network access information, includes:
transmitting the data network access information to a second network function, wherein the data network access information is used to trigger the second network function to establish or modify the PDU session based on the data network access information.

In some embodiments, the data network access information includes: Data Network Access Identifier (DNAI) list;
wherein the DNAI list satisfies at least one or more of the following:
energy consumption of a data network access indicated by a DNAI in the DNAI list is less than or equal to a first value;
energy efficiency of a data network access indicated by a DNAI in the DNAI list is greater than or equal to a second value; or
a data network access indicated by a DNAI in the DNAI list supports a target application.

In some embodiments, the method further includes:
determining energy consumption information and/or energy efficiency information of a data network access indicated by each DNAI in the DNAI list.

In some embodiments, the data network access information includes: a target DNAI;
wherein a target data network access corresponding to the target DNAI satisfies at least one or more of the following:
energy consumption of the target data network access is less than or equal to a third value;
energy efficiency of the target data network access is greater than or equal to a fourth value;
energy consumption of the target data network access is less than energy consumptions of data network access corresponding to other DNAIs in the DNAI list except the target DNAI; or
energy efficiency of a data network access indicated by the target DNAI is greater than energy efficiencies of data network access corresponding to other DNAIs in the DNAI list except the target DNAI.

In some embodiments, the triggering establishment or modification of the PDU session based on the data network access information, includes:
triggering to take a UPF capable of accessing a DNAI indicated by the data network access information as an anchor UPF for the PDU session;
triggering change of an anchor UPF of the PDU session, and taking a UPF capable of accessing a DNAI indicated by the data network access information as a new anchor UPF for the PDU session;
triggering to add an anchor UPF for the PDU session, and adding a UPF capable of accessing a DNAI indicated by the data network access information as a new anchor UPF for the PDU session.

In some embodiments, the energy consumption information of the network using the data network access, includes: energy consumption information of a network function that accesses or serves the data network access; and/or,
the energy efficiency information of the network using the data network access, includes: energy efficiency information of a network function that accesses or serves the data network access; and/or,
the energy consumption information of the UE using the data network access, includes: energy consumption information of the UE for transmitting data to the data network access; and/or,
the energy efficiency information of the UE using the data network access, includes: energy efficiency information of the UE for transmitting data to the data network access.

In some embodiments, the energy consumption information or energy efficiency information includes at least one or more of the following:
energy consumption information or energy efficiency information of the network or UE for transmitting a target PDU session or each PDU session by using the data network access;
energy consumption information or energy efficiency information of the network for transmitting data of a target UE or each UE by using the data network access;
energy consumption information or energy efficiency information of the network or UE for transmitting a target application or each application by using the data network access; or
energy consumption information or energy efficiency information of the network or UE for transmitting data in a target network slice by using the data network access.

In some embodiments, the energy consumption information includes: statistical information or prediction information of energy consumption; and/or
the energy efficiency information includes: statistical information or prediction information of energy efficiency.

In some embodiments, the obtaining first information of at least one data network access, includes:
obtaining the first information of the at least one data network access from a third network function or the UE;
wherein the third network function includes at least one or more of the following:
   control plane function for accessing or serving the data network access;
   user plane function for accessing or serving the data network access;
   strategy control function;
   network energy management function;
   network exposure function; or
   network data analytics function.
In some embodiments, the obtaining the first information of the at least one data network access from a third network function or the UE, includes:
   transmitting a first message to the third network function or the UE, wherein the first message is used to request the first information of the at least one data network access;
   receiving a second message from the third network function or the UE, wherein the second message carries the first information of the at least one data network access.

In some embodiments, the first message carries DNAI of the at least one data network access and restriction information of the first information;
wherein the restriction information of the first information includes at least one or more of the following:
indication information for requesting energy consumption information or energy efficiency information;
indication information for requesting energy consumption information or energy efficiency information regarding a target PDU session, a target UE, a target application, or a target network slice; or
indication information for requesting energy consumption information or energy efficiency information for each PDU session, each UE or each application.

One embodiment of the present disclosure provides an information transmission method, which is applied to a user equipment (UE), including:
reporting first information of at least one data network access to a first network function; wherein the first information includes at least one or more of the following: energy consumption information, which includes energy consumption information of the UE using the data network access, and energy efficiency information, which includes energy efficiency information of the UE using the data network access.

In some embodiments, the energy consumption information of the UE using the data network access, includes: energy consumption information of the UE for transmitting data to the data network access;
and/or,
the energy efficiency information of the UE using the data network access, includes: energy efficiency information of the UE for transmitting data to the data network access.

In some embodiments, the energy consumption information or energy efficiency information includes at least one or more of the following:
energy consumption information or energy efficiency information of the UE for transmitting a target PDU session or each PDU session by using the data network access;
energy consumption information or energy efficiency information of the UE for transmitting a target application or each application by using the data network access; or
energy consumption information or energy efficiency information of the UE for transmitting data in a target network slice by using the data network access.

In some embodiments, the reporting the first information of at least one data network access to the first network function, includes:
receiving a first message transmitted by the first network function, wherein the first message is used to request for the first information of the at least one data network access;
according to the first message, reporting the first information of at least one data network access to the first network function.

In some embodiments, the first message carries DNAI of the at least one data network access and restriction information of the first information;
wherein the restriction information of the first information includes at least one or more of the following:
indication information for requesting energy consumption information or energy efficiency information;
indication information for requesting energy consumption information or energy efficiency information regarding a target PDU session, a target UE, a target application, or a target network slice; or
indication information for requesting energy consumption information or energy efficiency information for each PDU session, each UE or each application.

One embodiment of the present disclosure provides a communication device, which is a first network function, including: a memory, a transceiver, and a processor;
wherein the memory is used to store a computer program; the transceiver is used to receive and send data under the control of the processor; the processor is used to read the computer program in the memory and execute the following operations:
obtaining first information of at least one data network access; wherein the first information includes at least one or more of the following: energy consumption information, which includes energy consumption information of a network or a user equipment (UE) using the data network access, and/or, energy efficiency information, which includes energy efficiency information of the network or UE using the data network access;
determining data network access information for a protocol data unit (PDU) session according to the first information;
triggerring establishment or modification of the PDU session based on the data network access information.

In some embodiments, the processor is used to read the computer program in the memory and execute the following operations:
transmitting the data network access information to a second network function, wherein the data network access information is used to trigger the second network function to establish or modify the PDU session based on the data network access information.

In some embodiments, the data network access information includes: data network access identifier (DNAI) list;
wherein the DNAI list satisfies at least one or more of the following:
energy consumption of a data network access indicated by a DNAI in the DNAI list is less than or equal to a first value;
energy efficiency of a data network access indicated by a DNAI in the DNAI list is greater than or equal to a second value;
a data network access indicated by a DNAI in the DNAI list supports a target application.

In some embodiments, the processor is used to read the computer program in the memory and execute the following operations:
determining energy consumption information and/or energy efficiency information of a data network access indicated by each DNAI in the DNAI list.

In some embodiments, the data network access information includes: a target DNAI;
wherein a target data network access corresponding to the target DNAI satisfies at least one or more of the following:
energy consumption of the target data network access is less than or equal to a third value;
energy efficiency of the target data network access is greater than or equal to a fourth value;
energy consumption of the target data network access is less than energy consumptions of data network access corresponding to other DNAIs in the DNAI list except the target DNAI;
energy efficiency of a data network access indicated by the target DNAI is greater than energy efficiencies of data network access corresponding to other DNAIs in the DNAI list except the target DNAI.

In some embodiments, the processor is used to read the computer program in the memory and execute the following operations:
triggering to take a UPF capable of accessing a DNAI indicated by the data network access information as an anchor UPF for the PDU session;
triggering change of an anchor UPF of the PDU session, and taking a UPF capable of accessing a DNAI indicated by the data network access information as a new anchor UPF for the PDU session;
triggering to add an anchor UPF for the PDU session, and adding a UPF capable of accessing a DNAI indicated by the data network access information as a new anchor UPF for the PDU session.

In some embodiments, the energy consumption information of the network using the data network access, includes: energy consumption information of a network function that accesses or serves the data network access; and/or,
the energy efficiency information of the network using the data network access, includes: energy efficiency information of a network function that accesses or serves the data network access; and/or,
the energy consumption information of the UE using the data network access, includes: energy consumption information of the UE for transmitting data to the data network access; and/or,
the energy efficiency information of the UE using the data network access, includes: energy efficiency information of the UE for transmitting data to the data network access.

In some embodiments, the energy consumption information or energy efficiency information includes at least one or more of the following:
energy consumption information or energy efficiency information of the network or UE for transmitting a target PDU session or each PDU session by using the data network access;
energy consumption information or energy efficiency information of the network for transmitting data of a target UE or each UE by using the data network access;
energy consumption information or energy efficiency information of the network or UE for transmitting a target application or each application by using the data network access;
energy consumption information or energy efficiency information of the network or UE for transmitting data in a target network slice by using the data network access.

In some embodiments, the energy consumption information includes: statistical information or prediction information of energy consumption; and/or
the energy efficiency information includes: statistical information or prediction information of energy efficiency.

In some embodiments, the processor is used to read the computer program in the memory and execute the following operations:
obtaining the first information of the at least one data network access from a third network function or the UE;
wherein the third network function includes at least one or more of the following:
   control plane function for accessing or serving the data network access;
   user plane function for accessing or serving the data network access;
   strategy control function;
   network energy management function;
   network exposure function;
   network data analytics function.
In some embodiments, the processor is used to read the computer program in the memory and execute the following operations:
   transmitting a first message to the third network function or the UE, wherein the first message is used to request the first information of the at least one data network access;
   receiving a second message from the third network function or the UE, wherein the second message carries the first information of the at least one data network access.
In some embodiments, the first message carries DNAI of the at least one data network access and restriction information of the first information;
   wherein the restriction information of the first information includes at least one or more of the following:
   indication information for requesting energy consumption information or energy efficiency information;
   indication information for requesting energy consumption information or energy efficiency information regarding a target PDU session, a target UE, a target application, or a target network slice;
   indication information for requesting energy consumption information or energy efficiency information for each PDU session, each UE or each application.
One embodiment of the present disclosure provides an communication device, which is a user equipment (UE), including: a memory, a transceiver, and a processor;
   wherein the memory is used to store a computer program; the transceiver is used to receive and send data under the control of the processor; the processor is used to read the computer program in the memory and execute the following operations:
   reporting first information of at least one data network access to a first network function; wherein the first information includes at least one or more of the following: energy consumption information, which information includes energy consumption information of the UE using the data network access, and energy efficiency information, which includes energy efficiency information of the UE using the data network access.

In some embodiments, the energy consumption information of the UE using the data network access, includes: energy consumption information of the UE for transmitting data to the data network access;
and/or,
the energy efficiency information of the UE using the data network access, includes: energy efficiency information of the UE for transmitting data to the data network access.

In some embodiments, the energy consumption information or energy efficiency information includes at least one or more of the following:
energy consumption information or energy efficiency information of the UE for transmitting a target PDU session or each PDU session by using the data network access;
energy consumption information or energy efficiency information of the UE for transmitting a target application or each application by using the data network access;
energy consumption information or energy efficiency information of the UE for transmitting data in a target network slice by using the data network access.

In some embodiments, the processor is used to read the computer program in the memory and execute the following operations:
receiving a first message transmitted by the first network function, wherein the first message is used to request for the first information of the at least one data network access;
according to the first message, reporting the first information of at least one data network access to the first network function.

In some embodiments, the first message carries DNAI of the at least one data network access and restriction information of the first information;
wherein the restriction information of the first information includes at least one or more of the following:
indication information for requesting energy consumption information or energy efficiency information;
indication information for requesting energy consumption information or energy efficiency information regarding a target PDU session, a target UE, a target application, or a target network slice;
indication information for requesting energy consumption information or energy efficiency information for each PDU session, each UE or each application.

One embodiment of the present disclosure provides an information processing apparatus, which is a first network function, including:
an obtaining unit used to obtain first information of at least one data network access; wherein the first information includes at least one or more of the following: energy consumption information, which includes energy consumption information of a network or a user equipment (UE) using the data network access, and/or, energy efficiency information, which includes energy efficiency information of the network or UE using the data network access;
a first determining unit used to determine data network access information for a protocol data unit (PDU) session according to the first information;
a triggering unit used to trigger establishment or modification of the PDU session based on the data network access information.

One embodiment of the present disclosure provides an information processing apparatus, which is a user equipment (UE), including:
a reporting unit used to report first information of at least one data network access to a first network function; wherein the first information includes at least one or more of the following: energy consumption information, which includes energy consumption information of the UE using the data network access, and/or, energy efficiency information, which includes energy efficiency information of the UE using the data network access.

One embodiment of the present disclosure provides a processor-readable storage medium, including a computer program stored thereon; wherein the computer program is used to cause a processor to execute the above method.

The beneficial effects of the present disclosure are as follows.

According to the above technical solution, by determining data network access information based on energy consumption information and/or energy efficiency information of at least one data network access, it can ensure that the determined data network access meets energy consumption and/or energy efficiency requirements. This enables the UE or network to use the PDU session matching the data network access information for data transmission, thereby reducing the energy consumption of the network or UE and improving the energy efficiency performance of the network or UE.

### BRIEF DESCRIPTION OF THE DRAWINGS

In order to provide a clearer explanation of technical solutions described in the embodiments of the present disclosure or the related art, accompanying drawings required for describing the embodiments or the related art will be briefly introduced hereinafter. It is evident that the drawings in the following description represent only some embodiments recorded herein, and those of ordinary skill in the art may obtain other drawings based on these without creative effort.
FIG. 1 is a schematic diagram of a network system applicable to an embodiment of the present disclosure;
FIG. 2 is a first schematic flow chart of an information processing method according to the embodiment of the present disclosure;
FIG. 3 is a schematic flow chart of an application scenario 1;
FIG. 4 is a schematic flow chart of an application scenario 2;
FIG. 5 is a schematic flow chart of an application scenario 3;
FIG. 6 is a schematic flow chart of an application scenario 4;
FIG. 7 is a schematic flow chart of an application scenario 5;
FIG. 8 is a schematic flow chart of an application scenario 6;
FIG. 9 is a second schematic flow chart of an information processing method according to the embodiment of the present disclosure;
FIG. 10 is a first schematic diagram showing units of an information processing apparatus according to an embodiment of the present disclosure;
FIG. 11 is a first block diagram of a communication device according to an embodiment of the present disclosure;
FIG. 12 is a second schematic diagram showing units of an information processing apparatus according to an embodiment of the present disclosure; and
FIG. 13 is a second block diagram of a communication device according to an embodiment of the present disclosure.

### DETAILED DESCRIPTION

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship. In the embodiment of the present application, the term "plurality" refers to two or more than two, and other quantifiers are similar.

In the embodiments of the present disclosure, terms such as "exemplary" or "for example" are used to illustrate an example, provide an instance, or give an explanation. Any embodiment or design solution described as "exemplary" or "for example" shall not be interpreted as being superior to or more advantageous than other embodiments or design solutions. Rather, the use of terms such as "exemplary" or "for example" is intended to present the related concepts in a concrete manner.

Embodiments of the present disclosure are described hereinafter in conjunction with the accompanying drawings. The information processing method and apparatus, information transmission method and apparatus, and communication device provided in the embodiments of the present disclosure can be applied to a wireless communication system. The wireless communication system can be a system (hereinafter referred to as a 5G system) using the fifth generation (5G) mobile communication technology. Those skilled in the art can understand that the 5G New Radio (NR) system is only an example and is not a limitation.

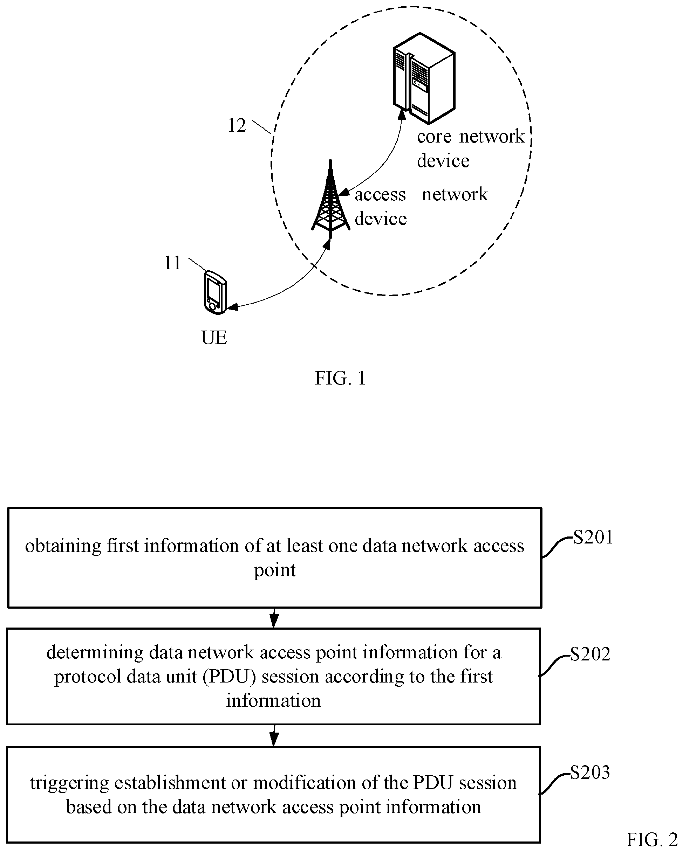

FIG. 1 is a structural diagram of a wireless communication system applicable to an embodiment of the present disclosure. The wireless communication system includes a user equipment 11 and a network device 12. The user equipment 11 may be a mobile phone, a tablet personal computer, a laptop computer or a notebook computer, a personal digital assistant (PDA), a handheld computer, a netbook, an ultra-mobile personal computer (UMPC), a mobile internet device (MID), an augmented reality (AR)/virtual reality (VR) device, a robot, a wearable device, a vehicle user equipment (VUE), a pedestrian user equipment (PUE), a smart home (a home appliance with wireless communication function, such as a refrigerator, a television, a washing machine or furniture, etc.), a game console, a personal computer (PC), a teller machine or a self-service machine, a sensing service terminal, various sensors, a smart camera and other terminal side devices. The wearable device includes: a smart watch, a smart band, a smart headset, a smart glasses, a smart jewelry (a smart bangle, a smart bracelet, a smart ring, a smart necklace, a smart anklet, a smart foot chain, etc.), a smart wristband, a smart clothing, etc. It is to be noted that the specific type of the user equipment 11 is not limited in the embodiments of the present disclosure. The network device 12 may include an access network device or a core network device. The access network device may also be referred to as a radio access network device, a radio access network (RAN), a radio access network function or a radio access network unit. The access network device may include a base station, a WLAN access or a WiFi node, etc. The base station may be referred to as a node B, an evolved node B (eNB), an access, a base transceiver station (BTS), a radio base station, a radio transceiver, a basic service set (BSS), an extended service set (ESS), a home node B, a home evolved node B, a transmitting receiving point (TRP), a perception signal sending device, a perception information receiving device or other appropriate terms in the field, as long as the same technical effect is achieved, the base station is not limited to a specific technical vocabulary. It is to be noted that in the embodiments of the present disclosure, only the base station in the NR system is used as an example for introduction, and the specific type of the base station is not limited. The core network device may include but is not limited to at least one or more of the following: core network node, core network function, mobility management entity (MME), access and mobility management function (AMF), session management function (SMF), user plane function (UPF), policy control function (PCF), policy and charging rules function unit (PCRF), edge application service discovery function (EASDF), unified data management (UDM), unified data repository (UDR), home subscriber server (HSS), centralized network configuration (CNC), network repository function (NRF), network exposure function (NEF), local NEF (or L-NEF), binding support function (BSF), application function (AF), sensing Function (SF), etc.

First, based on the technical solution provided by the present disclosure, some technical terms that may be involved are introduced.

### 1. Protocol Data Unit (PDU) session establishment and modification based on data network access.

In the 5G mobile communication system, the data network access is identified by a Data Network Access Identifier (DNAI). When UE requests to establish a PDU session, the network can select a local DNAI for the PDU session based on UE's location, contract data, and network policy, and then determine a UPF (called PDU Session Anchors (PSA)) that can access the DNAI, thereby establishing a PDU session between the UE and the UPF. After the PDU session is established, the network can also modify a data transmission path of the PDU session based on changes in the UE's location, contract data, and network policy, that is, selecting a new DNAI, and changing, adding or deleting the PSA accordingly; if necessary, it needs to add an uplink classifier/branching point (UL CL/BP) UPF between the UE and the PSA, or delete or change the UL CL/BP UPF.

### 2. Energy consumption and energy efficiency of communication systems/communication device.

The energy consumption of the communication device refers to energy consumed by the communication device to support communication operations and complete communication tasks. The energy consumption can be calculated by measuring the power of the device over a period of time. The energy consumption of the entire communication system is a sum of energy consumptions of all communication devices in the system. The energy efficiency of the communication system/communication device reflects an efficiency of the energy consumption, and can be defined as a ratio of an amount of transmitted data to the energy consumption for transmitting the amount of data, or a ratio of a covered (/serviced) communication area to the energy consumption for providing communication services to the area. The energy efficiency can be targeted at the entire network, subnet (such as a wireless access network, a single network device, a communication site (such as a data center), UE, etc.

Based on the analysis, the embodiments of the present disclosure provide an information processing method and apparatus, an information transmission method and apparatus, and communication device, which can select an optimal data network access, thereby reducing the energy consumption of the network or UE, and improving the energy efficiency performance of the network or UE.

The method and the device are based on the same application concept. Since the principles of solving the problems by the method and the device are similar, the implementation of the device and the method can refer to each other, and the repeated parts will not be repeated.

As shown in FIG. 2, one embodiment of the present disclosure provides an information processing method, which is performed by a first network function and includes the following steps.

Step S201: obtaining first information of at least one data network access.

The first information includes at least one of energy consumption information and energy efficiency information.

It is to be noted that the energy consumption information includes energy consumption information of the network or UE using the data network access, and the energy efficiency information includes energy efficiency information of the network or UE using the data network access.

In some embodiments, the energy consumption information of the network using the data network access, includes: energy consumption information of a network function that accesses or serves the data network access.

In some embodiments, the energy efficiency information of the network using the data network access, includes: energy efficiency information of a network function that accesses or serves the data network access.

In some embodiments, the energy consumption information of the UE using the data network access, includes: energy consumption information of the UE for transmitting data to the data network access. Specifically, the energy consumption information of the UE for transmitting data to the data network access, includes: energy consumption information of the UE for transmitting data to an edge application server (EAS) corresponding to the data network access.

In some embodiments, the energy efficiency information of the UE using the data network access, includes: energy efficiency information of the UE for transmitting data to the data network access. Specifically, the energy efficiency information of the UE for transmitting data to the data network access, includes: energy efficiency information of the UE for transmitting data to the EAS corresponding to the data network access.

Step 202: determining data network access information for a protocol data unit (PDU) session according to the first information.

Step 203: triggering establishment or modification of the PDU session based on the data network access information.

In some embodiments, the first network function in the embodiments of the present disclosure may be: a network function that provides services for applications, such as an application function (AF); a network function that implements network capability exposure, such as a network exposure function (NEF); a network function that implements network energy management, such as a network energy management function (NEMF); a network function that implements policy control, such as a policy control function (PCF); a network function that implements session management, such as a session management function (SMF).

It is to be noted that in the embodiment of the present disclosure, the data network access information is determined based on the energy consumption information and/or energy efficiency information of at least one data network access, so that the UE or network can use the PDU session matching the data network access information for data transmission, thereby reducing the energy consumption of the network or UE and improving the energy efficiency performance of the network or UE.

It is to be noted that the energy efficiency in the embodiments of the present disclosure is used to reflect an efficiency of energy consumption, and can be obtained by the ratio of the amount of transmitted data to the energy consumption, that is, the energy efficiency is the ratio of the amount of transmitted data to the energy consumption, or it can also be obtained by the ratio of a covered or served communication area to the energy consumption, that is, the energy efficiency is the ratio of the communication area to the energy consumption.

In some embodiments, the energy efficiency information may be represented by an energy efficiency level, and the energy consumption information may be represented by an energy consumption level.

In some embodiments, the data network access information includes one of the following:
A11, data network access identifier (DNAI) list.

It is to be noted that the data network access in the embodiment of the present disclosure is indicated by DNAI, that is, the data network access is corresponds to DNAI in a one-to-one manner, i.e., one data network access corresponding to one DNAI. Therefore, the energy consumption of the data network access in the embodiment of the present disclosure can also be referred to as an energy consumption of the DNAI; the energy efficiency of the data network access can also be referred to as an energy efficiency of the DNAI.

In this case, it can be understood that the first network function determines one or more DNAIs based on the first information.

The DNAI list satisfies at least one or more of the following:
A111. energy consumption of a data network access indicated by a DNAI in the DNAI list is less than or equal to a first value.

It is to be noted that the energy consumption of the data network access being less than or equal to the first value can be understood as the data network access having low energy consumption, that is, the data network access is a low-energy data network access. That is, all DNAIs in the DNAI list in this case indicate low-energy data network access.

A112. energy efficiency of a data network access indicated by a DNAI in the DNAI list is greater than or equal to a second value.

It is to be noted that the energy efficiency of the data network access being greater than or equal to the second value can be understood as the data network access having high energy efficiency. That is, the data network access is a high-energy-efficiency data network access. That is, all DNAIs in the DNAI list in this case indicate high-energy-efficiency data network access.

A113. A data network access indicated by DNAI in the DNAI list supports a target application.

This situation can be understood as that all DNAIs in the DNAI list indicate data network access that support the target application.

A12. A target DNAI.

In this case, it can be understood that the first network function determines one specific DNAI based on the first information.

The target data network access corresponding to the target DNAI satisfies at least one or more of the following:
A121. energy consumption of the target data network access is less than or equal to a third value.

It is to be noted that the energy consumption of the target data network access being less than or equal to the third value can be understood as the target data network access being a low-energy data network access; it can be understood as that the first network device determines a low-energy data network access.

A122. energy efficiency of the target data network access is greater than or equal to a fourth value.

It is to be noted that the energy efficiency of the target data network access being greater than or equal to the fourth value can be understood as the target data network access being a high-efficiency data network access; it can be understood that the first network device determines a high-efficiency data network access.

A123. energy consumption of the target data network access is less than energy consumptions of data network access corresponding to other DNAIs in the DNAI list except the target DNAI.

This situation can be understood as that a DNAI list is pre-set on the first network function side, and the target DNAI is selected from the DNAI list. Specifically, the target DNAI is a DNAI corresponding to a data network access with the lowest energy consumption in the DNAI list.

A124. energy efficiency of a data network access indicated by the target DNAI is greater than energy efficiencies of data network access corresponding to other DNAIs in the DNAI list except the target DNAI.

This situation can be understood as that a DNAI list is pre-set on the first network function side, and the target DNAI is selected from the DNAI list. Specifically, the target DNAI is a DNAI corresponding to a data network access with the highest energy efficiency in the DNAI list.

It is to be noted here that since the processing in the present disclosure is performed on PDU sessions, the network function that implements session management can directly process PDU sessions, and the network function that cannot implement session management cannot process PDU sessions; thus, in the embodiments of the present disclosure, the first network function is classified into two categories: one is a network function that can implement session management, such as SMF; the other is a network function that does not directly perform session management but can affect session management by providing relevant parameters, such as a network function that provides services for applications, a network function that implements network capability exposure, a network function that implements network energy management, and a network function that implements policy control.

The applications of these two categories of network functions are described in detail separately as follows.

### 1. The first network function is a network function that does not directly perform session management but can affect session management by providing relevant parameters.

It should be noted that, in this case, the first network function usually determines a DNAI list first, and then notifies a network function that implements session management of the DNAI list. That is to say, when the first network function provides the DNAI list to the network function that implements session management, it needs to consider the energy efficiency and/or energy consumption of the data network access, and only provide DNAIs with low energy consumption and/or high energy efficiency.

In some embodiments, the data network access information includes A11.

In some embodiments, the triggering establishment or modification of the PDU session based on the data network access information, includes:
transmitting the data network access information to a second network function, where the data network access information is used to trigger the second network function to establish or modify the PDU session based on the data network access information.

In some embodiments, the second network function in the embodiments of the present disclosure is a network function that implements session management, such as SMF.

It is to be noted here that after receiving the DNAI list transmitted by the first network function, the network function that implements session management needs to select an appropriate DNAI from the DNAI list, and then establish or modify the PDU session based on the DNAI.

In some embodiments, the method further includes:
determining energy consumption information and/or energy efficiency information of a data network access indicated by each DNAI in the DNAI list.

It is to be noted that by determining the energy consumption information and/or energy efficiency information of the data network access indicated by each DNAI in the DNAI list, and then transmitting the information together with the DNAI list to the network function that implements session management, it can assist the network function that implements session management to select the DNAI based on the energy consumption information and/or energy efficiency information, thereby improving the accuracy of the DNAI selection.

### 2. The first network function is a network function capable of implementing session management.

It is to be noted that in this case, the first network function usually directly determines a target DNAI, and then establishes or modifies the PDU session based on the target DNAI. That is, when selecting a data network access, the first network function gives priority to using a DNAI with low energy consumption or high energy efficiency, and/or does not use a DNAI with high energy consumption or low energy efficiency. For example, the first network function deletes an anchor UPF of a PDU session corresponding to a DNAI with high energy consumption or low energy efficiency, and selects and uses an anchor UPF of a PDU session corresponding to a DNAI with low energy consumption or high energy efficiency.

For the above two categories of network functions, in some embodiments, the specific implementation of triggering establishment or modification of the PDU session based on the data network access information, includes one of the following:
B11. triggering selection of a UPF capable of accessing the DNAI indicated by the data network access information as an anchor UPF for the PDU session.

It is to be noted that the UPF capable of accessing the DNAI indicated by the data network access information can be understood as a UPF capable of accessing a data network access corresponding to the DNAI indicated by the data network access information.

In some embodiments, for the first network function that does not directly perform session management but can affect session management by providing relevant parameters, the first network function needs to transmit the DNAI list to the network function that can implement session management. Each DNAI in the DNAI list can be used as a candidate DNAI for selection by the network function that can implement session management. When the network function that implements session management is used in a specific application, it will usually select a DNAI from the DNAI list and use a UPF capable of accessing the data network access corresponding to the selected DNAI as an anchor UPF for the PDU session.

In some embodiments, for the first network function that is a network function capable of implementing session management, the first network function directly selects a target DNAI and uses a UPF capable of accessing a data network access corresponding to the selected target DNAI as an anchor UPF for the PDU session.

B12. Triggering change of an anchor UPF of the PDU session, and taking a UPF capable of accessing a DNAI indicated by the data network access information as a new anchor UPF for the PDU session.

In some embodiments, for the first network function that does not directly perform session management but can affect session management by providing relevant parameters, the first network function needs to transmit the DNAI list to the network function that can implement session management. Each DNAI in the DNAI list can be selected as a candidate DNAI for the network function that can implement session management to implement the change of the anchor UPF of the PDU session. When the network function that implements session management is used in a specific application, it will usually select a DNAI from the DNAI list and takes a UPF capable of accessing a data network access corresponding to the selected DNAI as a new anchor UPF for the PDU session.

In some embodiments, for the first network function that is a network function capable of implementing session management, the first network function directly selects a target DNAI and takes a UPF capable of accessing a data network access corresponding to the selected target DNAI as a new anchor UPF for the PDU session.

B13. Triggering to add an anchor UPF for the PDU session, and adding a UPF capable of accessing the DNAI indicated by the data network access information as a new anchor UPF for the PDU session.

In some embodiments, for the first network function that does not directly perform session management but can affect session management by providing relevant parameters, the first network function needs to transmits the DNAI list to the network function that can implement session management. Each DNAI in the DNAI list can be selected as a candidate DNAI for the network function that can implement session management to achieve adding the anchor UPF for the PDU session. When the network function that implements session management is used in a specific application, it will usually select a DNAI from the DNAI list and take a UPF capable of accessing the data network access corresponding to the selected DNAI as a new anchor UPF of the PDU session.

In some embodiments, for the first network function that is a network function capable of implementing session management, the first network function directly selects a target DNAI and takes a UPF capable of accessing the data network access corresponding to the selected target DNAI as a new anchor UPF of the PDU session.

The above implementation can be understood as that whether the PDU session is established or modified (changed or added), it is necessary to determine the anchor UPF based on the data network access information, and take a UPF capable of accessing the DNAI indicated by the data network access information as the anchor UPF for the PDU session.

In some embodiments, the energy consumption information or energy efficiency information d in the embodiments of the present disclosure includes at least one or more of the following:
C11. Energy consumption information or energy efficiency information when the network or UE uses the data network access to transmit a target PDU session or each PDU session.

This situation can be understood as the energy consumption information or energy efficiency information is for the target PDU session or each PDU session.

In some embodiments, the target PDU session may be any one or more PDU sessions, such as one or more PDU sessions corresponding to a specific data network name DNN and/or network slice (identified by single network slice selection assistance information (S-NSSAI)). When targeting the target PDU session, it is necessary to obtain energy consumption information or energy efficiency information for the target PDU session; when targeting each PDU session, it is necessary to obtain energy consumption information or energy efficiency information for each PDU session respectively.

C12. Energy consumption information or energy efficiency information when the network uses the data network access to transmit data of a target UE or each UE.

This situation can be understood as the energy consumption information or energy efficiency information is for the target UE or each UE.

In some embodiments, the target UE may be any one or more UEs. When targeting the target UE, it is necessary to obtain energy consumption information or energy efficiency information for the target UE; when targeting each UE, it is necessary to obtain energy consumption information or energy efficiency information for each UE respectively.

C13. Energy consumption information or energy efficiency information when the network or UE uses the data network access to transmit a target application or each application.

This situation can be understood as the energy consumption information or energy efficiency information is for the target application or each application.

In some embodiments, the target application may be any one or more applications. When targeting the target application, it is necessary to obtain energy consumption information or energy efficiency information for the target application; when targeting each application, it is necessary to obtain energy consumption information or energy efficiency information for each application respectively.

C14. Energy consumption information or energy efficiency information when the network or UE uses the data network access to transmit data in a target network slice.

This situation can be understood as the energy consumption information or energy efficiency information is for the target network slice.

In some embodiments, the target network slice may be any one or more network slices. When targeting the target network slice, it is necessary to obtain energy consumption information or energy efficiency information for the target network slice.

It is to be noted that the above C11-C14 can be understood as limiting a granularity of energy consumption information or energy efficiency information, that is, a collection granularity or obtaining granularity.

In some embodiments, the energy consumption information may include statistical information or prediction information of energy consumption. That is, the statistical information or prediction information can represent the energy consumption level.

In some embodiments, the energy efficiency information includes statistical information or prediction information of energy efficiency. That is, the statistical information or prediction information can represent the energy efficiency level.

In some embodiments, one specific implementation of obtaining first information of at least one data network access, includes:
obtaining the first information of the at least one data network access from a third network function or UE.

The third network function includes at least one or more of the following:
D11. Control plane function for accessing or serving the data network access;
D12. User plane function for accessing or serving the data network access;
D13. Strategy control function;
D14. Network energy management function;
D15. Network exposure function;
D16. Network data analytics function, for example, a network data analytics function (NWDAF).

It is to be noted here that the first network device usually obtains statistical information or prediction information of energy consumption and/or statistical information or prediction information of energy efficiency from the network data analytics function.

In some embodiments, the statistical information or prediction information may also be referred to as analytical information.

In some embodiments, one specific implementation of obtaining the first information of the at least one data network access from the third network function or UE, includes:
transmitting a first message to the third network function or the UE, where the first message is used to request the first information of the at least one data network access;
receiving a second message from the third network function or the UE, where the second message carries the first information of the at least one data network access.

That is, when the first network function obtains the first information, it needs to first transmit a first message to the corresponding network function or UE to request the network function or UE to provide the first information. In some embodiments, if the first network function transmits the first message to the UE, the corresponding UE provides the energy efficiency information of the UE using the data network access, and/or the energy consumption information of the UE using the data network access. In some embodiments, if the first network function transmits the first message to other corresponding network functions, the corresponding network function provides the energy consumption information of the network or UE using the data network access, and/or the energy efficiency information of the network or UE using the data network access. It is to also be noted that the energy consumption information of the UE using the data network access provided by other network functions, and/or the energy efficiency information of the UE using the data network access, is also obtained from the corresponding UE.

In some embodiments, the first message carries DNAI of the at least one data network access and restriction information of the first information.

In some embodiments, if at least one data network access accesses the same data network name (DNN) or multiple DNNs, the first message may also carry the DNN.

The restriction information of the first information includes at least one or more of the following:
E11. Indication information for requesting energy consumption information or energy efficiency information.

That is, the indication information in this case is used to indicate a type of information requested.

E12. Indication information for requesting energy consumption information or energy efficiency information regarding a target PDU session, a target UE, a target application, or a target network slice.

E13. Indication information for requesting energy consumption information or energy efficiency information for each PDU session, each UE or each application.

It is to be noted that the above E12 and E13 indicate a granularity of the requested energy consumption information or energy efficiency information.

The specific application examples of the present disclosure are illustrated hereinafter with examples.

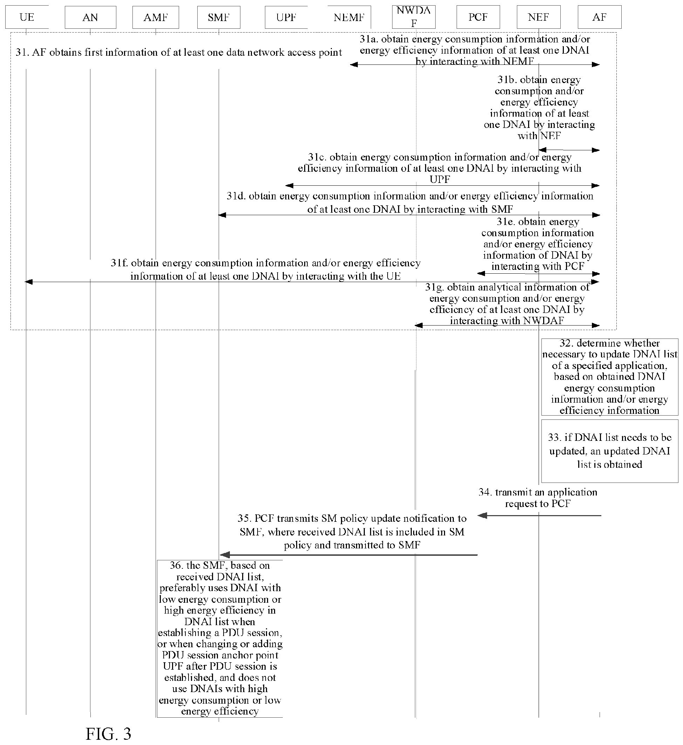

Application scenario 1: the first network function is AF.
As shown in FIG. 3, one specific implementation process includes:
Step 31: the AF obtains first information of at least one data network access.

Specifically, the AF obtains energy consumption information and/or energy efficiency information of at least one DNAI from a network function (NF) (e.g., NEMF, NEF, PCF, SMF, or UPF) or a UE, or obtains analytical information (e.g., statistical information or prediction information) of energy consumption and/or energy efficiency of at least one DNAI from an NWDAF.

Specifically, it may include one of the following steps:
Step 31a: AF obtains energy consumption information and/or energy efficiency information of at least one DNAI by interacting with NEMF;
Step 31b: AF obtains energy consumption information and/or energy efficiency information of at least one DNAI by interacting with NEF;
Step 31c: AF obtains energy consumption information and/or energy efficiency information of at least one DNAI by interacting with UPF.

Specifically, the AF transmits a first message to one or more UPFs directly or through the NEF, to request energy consumption information and/or energy efficiency information of at least one DNAI. The first message carries one or more DNAIs, which are used to indicate a request/subscription for energy consumption information and/or energy efficiency information of the network accessing a specified DNAI; or carries a DNN, which is used to indicate a request/subscription for energy consumption information and/or energy efficiency information of one or more DNAIs of this DNN which the network accesses.

The UPF replies/reports to AF, the energy consumption information and/or energy efficiency information of the network accessing DNAI. Specifically, the UPF determines the energy consumption information and/or energy efficiency information of UPF accessing the specified DNAI based on the energy consumption information and/or energy efficiency information of UPF currently accessing the specified DNAI, or statistical information of energy consumption and/or energy efficiency of previous access to the specified DNAI or prediction information of energy consumption and/or energy efficiency of future access to the specified DNAI; and transmits it to AF.

Step 31d: AF obtains energy consumption information and/or energy efficiency information of at least one DNAI by interacting with SMF.

Specifically, the AF transmits a first message to one or more SMFs directly or through the NEF, to request energy consumption information and/or energy efficiency information of at least one DNAI. The first message carries one or more DNAIs, which are used to indicate a request/subscription for energy consumption information and/or energy efficiency information of the network accessing a specified DNAI; or carries a DNN, which is used to indicate a request/subscription for energy consumption information and/or energy efficiency information of one or more DNAIs of this DNN for the network to access.

The SMF replies/reports to AF, the energy consumption information and/or energy efficiency information of the network accessing DNAI. The energy consumption information and/or energy efficiency information of the network accessing DNAI reported by SMF here may include: energy consumption information and/or energy efficiency information of the SMF serving the DNAI, and/or energy consumption information and/or energy efficiency information of UPF accessing the DNAI.

Step 31e: AF obtains energy consumption information and/or energy efficiency information of DNAI by interacting with PCF.

Specifically, the AF transmits a first message to one or more PCFs directly or through the NEF, to request the energy consumption information and/or energy efficiency information of the DNAI. The first message carries one or more DNAIs, which are used to indicate a request/subscription for energy consumption information and/or energy efficiency information of the network accessing a specified DNAI; or carries a DNN, which is used to indicate a request/subscription for energy consumption information and/or energy efficiency information of one or more DNAIs of this DNN for the network to access

The PCF replies/reports to the AF, the energy consumption information and/or energy efficiency information of the network accessing DNAI.

Specifically, if the PCF receives the first message from the AF, the PCF may request/subscribe to the energy consumption information and/or energy efficiency information of the corresponding DNAI from the SMF, and then reply/report to the AF, the energy consumption information and/or energy efficiency information of the network accessing DNAI based on the reply/report of the SMF. If the SMF receives a request for the energy consumption information and/or energy efficiency information of the DNAI from the AF or PCF, the SMF may request/subscribe to the energy consumption information and/or energy efficiency information of the corresponding DNAI from the UPF, and then reply/report to the AF, the energy consumption information and/or energy efficiency information of the network accessing DNAI based on the reply/report of the UPF and the energy consumption information and/or energy efficiency information of the SMF serving the DNAI.

Step 31f: AF obtains energy consumption information and/or energy efficiency information of at least one DNAI by interacting with the UE.

Specifically, the AF transmits a first message to the UE through user plane (or application layer), to request energy consumption information and/or energy efficiency information of at least one DNAI. The first message carries one or more DNAIs, which are used to indicate a request/subscription for energy consumption information and/or energy efficiency information of the UE accessing a specified DNAI; or carries a DNN, which is used to indicate a request/subscription for energy consumption information and/or energy efficiency information of one or more DNAIs of this DNN for the UE to access. The UE determines the energy consumption information and/or energy efficiency information of the UE accessing the specified DNAI based on the energy consumption information and/or energy efficiency information of the UE currently accessing the specified DNAI, or the statistical information of the energy consumption and/or energy efficiency of the previous access to the specified DNAI, or the prediction information of the energy consumption and/or energy efficiency of the future access to the specified DNAI, and sends transmits to the AF through the user plane (or application layer).

Step 31g: AF obtains analytical information of energy consumption and/or energy efficiency of at least one DNAI by interacting with NWDAF.

Step 32: AF determines whether it is necessary to update a DNAI list of a specified application, based on the obtained DNAI energy consumption information and/or energy efficiency information.

Step 33: if the DNAI list needs to be updated, an updated DNAI list is obtained.

Specifically, the AF determines a list of DNAIs with low energy consumption and/or high energy efficiency that support a specified application, based on the energy consumption information and/or energy efficiency information of DNAIs that support the application, where the list of DNAIs includes one or more DNAIs; or, the AF determines a list of DNAIs that support the application and energy consumption information and/or energy efficiency information of each DNAI therein.

Step 34: the AF transmits an application request to PCF directly or through NEF (or Unified data repository (UDR)).

In some embodiments, the application request carries an updated DNAI list, or the updated DNAI list and energy consumption information and/or energy efficiency information corresponding to each DNAI in the DNAI list, such as energy consumption level and/or energy efficiency level.

Step 35: the PCF transmits a session management (SM) policy update notification to the SMF, where the received DNAI list is included in the session management (SM) policy and is transmitted to the SMF.

Step 36: the SMF, based on the received DNAI list, preferably uses a DNAI with low energy consumption or high energy efficiency in the DNAI list when establishing a PDU session, or when changing or adding a PDU session anchor UPF after the PDU session is established, and does not use DNAIs with high energy consumption or low energy efficiency (for example, deleting a PDU session anchor UPF connected to the DNAI).

It is to be noted that for the scenario where the PDU session anchor UPF is changed or added after the PDU session is established, the SMF selects a new PSA UPF and (optional) UL CL/BP UPF for the PDU session based on the selected new DNAI with low energy consumption or high energy efficiency.

In some embodiments, if a new PDU session needs to be established to access a new DNAI (i.e., target DNAI), the SMF provides the selected new DNAI with low energy consumption or high energy efficiency to the AMF, and the AMF selects a new SMF based on the new DNAI and provides the new DNAI to the new SMF. The new SMF selects a new PSA UPF and (optionally) UL CL/BP UPF for the PDU session based on the new DNAI.

Application scenario 2: the first network function is NEF.

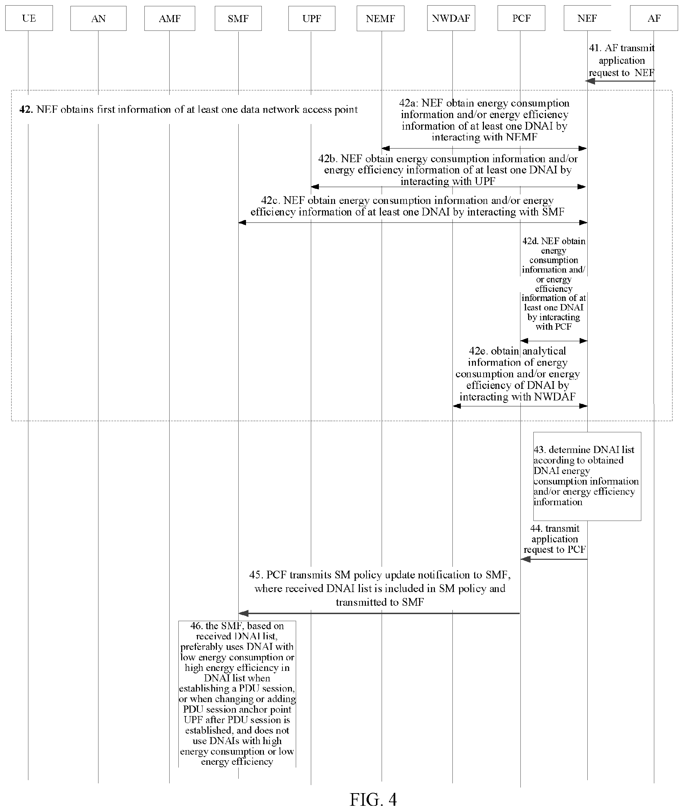

As shown in FIG. 4, one specific implementation process includes:
Step 41: the AF transmits an application request to the NEF.

The application request carries AF identifier and AF service identifier, application identifier or traffic filtering information, UE address, UE identifier or UE group identifier, DNN, DNAI list (including one or more DNAIs), S-NSSAI and other information to guide the transmission of applications/services.

Step 42: the NEF obtains first information of at least one data network access.

Specifically, the NEF obtains energy consumption information and/or energy efficiency information of at least one DNAI from a network function (e.g., NEMF, PCF, SMF, or UPF), or obtains analytical information (e.g., statistical information or prediction information) of energy consumption and/or energy efficiency of at least one DNAI from the NWDAF.

It is to be noted that the NEF obtains the energy consumption information and/or energy efficiency information of DNAI from NF (such as NEMF, PCF, SMF or UPF), or obtains analytical information of energy consumption and/or energy efficiency of DNAI from an NWDAF, based on the DNAI list or DNN carried in the AF request. Alternatively, if the AF request does not carry a DNAI list, the NEF obtains the energy consumption information and/or energy efficiency information of DNAI from NF (such as NEMF, PCF, SMF or UPF), or obtains analytical information of energy consumption and/or energy efficiency of DNAI from an NWDAF, based on a DNAI list or DNN mapped from the AF service identifier.

Specifically, it may include one of the following steps:
Step 42a: NEF obtains energy consumption information and/or energy efficiency information of at least one DNAI by interacting with NEMF.
Step 42b: NEF obtains energy consumption information and/or energy efficiency information of at least one DNAI by interacting with UPF.

Specifically, based on the determined DNAI (or DNN), the NEF selects one or more UPFs capable of accessing or serving the DNAI (or DNN), and transmits a first message to the selected UPF to request for the energy consumption information and/or energy efficiency information of the DNAI. The first message carries a DNAI in the DNAI list received or mapped from the AF, which is used to indicate a request/subscription to the energy consumption information and/or energy efficiency information of the network accessing a specified DNAI; or carries a DNN received or mapped from the AF, which is used to indicate a request/subscription to the energy consumption information and/or energy efficiency information of one or more DNAIs of this DNN for the network to access.

The UPF replies/reports to NEF, the energy consumption information and/or energy efficiency information of the network accessing DNAI. Specifically, the UPF determines the energy consumption information and/or energy efficiency information of UPF accessing the specified DNAI and sends it to NEF, based on the energy consumption information and/or energy efficiency information of UPF currently accessing the specified DNAI, or the statistical information of energy consumption and/or energy efficiency of previous access to the specified DNAI or the prediction information of energy consumption and/or energy efficiency of future access to the specified DNAI.

Step 42c: the NEF obtains energy consumption information and/or energy efficiency information of at least one DNAI by interacting with SMF.

Specifically, based on the determined DNAI (or DNN), the NEF selects one or more SMFs capable of accessing or serving the DNAI (or DNN), and transmits a first message to the selected SMF to request for the energy consumption information and/or energy efficiency information of the DNAI. The first message carries a DNAI in the DNAI list received or mapped from the AF, which is used to indicate a request/subscription to the energy consumption information and/or energy efficiency information of the network accessing the specified DNAI; or carries a DNN received or mapped from the AF, which is used to indicate a request/subscription to the energy consumption information and/or energy efficiency information of one or more DNAIs of this DNN for the network to access.

The SMF replies/reports to NEF, the energy consumption information and/or energy efficiency information of the network accessing DNAI. The energy consumption information and/or energy efficiency information of the network accessing DNAI reported by SMF here may include: the energy consumption information and/or energy efficiency information of the SMF serving the DNAI, and/or the energy consumption information and/or energy efficiency information of the UPF accessing the DNAI.

Step 42d: the NEF obtains energy consumption information and/or energy efficiency information of at least one DNAI by interacting with PCF.

Specifically, based on the determined DNAI (or DNN), the NEF selects one or more PCFs capable of accessing or serving the DNAI (or DNN), and transmits a first message to the selected PCF to request for the energy consumption information and/or energy efficiency information of the DNAI. The first message carries a DNAI in the DNAI list received or mapped from the AF, which is used to indicate a request/subscription to the energy consumption information and/or energy efficiency information of the network accessing the specified DNAI; or carries a DNN received or mapped from the AF, which is used to indicate a request/subscription to the energy consumption information and/or energy efficiency information of one or more DNAIs of this DNN for the network to access.

The PCF replies/reports to the NEF, the energy consumption information and/or energy efficiency information of the network accessing DNAI.

Specifically, if PCF receives the first message from NEF, the PCF may request/subscribe to SMF for the energy consumption information and/or energy efficiency information of the corresponding DNAI, and then reply/report to NEF the energy consumption information and/or energy efficiency information of the network accessing DNAI based on the reply/report of SMF. If SMF receives a request for energy consumption information and/or energy efficiency information of DNAI from NEF or PCF, SMF may request/subscribe to UPF for the energy consumption information and/or energy efficiency information of the corresponding DNAI, and then reply/report to NEF the energy consumption information and/or energy efficiency information of the network accessing DNAI based on the reply/report of UPF and the energy consumption information and/or energy efficiency information of the SMF serving the DNAI.

Step 42e: the NEF obtains analytical information of energy consumption and/or energy efficiency of DNAI by interacting with NWDAF.

Step 43: NEF determines a DNAI list according to the obtained DNAI energy consumption information and/or energy efficiency information.

Specifically, based on the DNAI energy consumption information and/or energy efficiency information provided by the NF (such as NEMF, UPF, SMF or PCF) or UE, or the analytical information of the energy consumption and/or energy efficiency of the DNAI provided by the NWDAF, the NEF determines a list of DNAIs with low energy consumption or high energy efficiency, which includes one or more DNAIs; or determines the energy consumption information and/or energy efficiency information of each DNAI in the DNAI list.

Step 44: NEF transmits an application request to PCF directly or through UDR.

The application request carries a DNAI list, or a DNAI list and energy consumption information or energy efficiency information corresponding to each DNAI in the DNAI list, such as energy consumption level or energy efficiency level. It is to be noted that, in some embodiments, the application request also carries other parameters in the application request in the step 41 (i.e., excluding the DNAI list).

Step 45-step 46 are the same as the steps 35-36 of the application scenario 1.

Application scenario 3: the first network function is PCF.

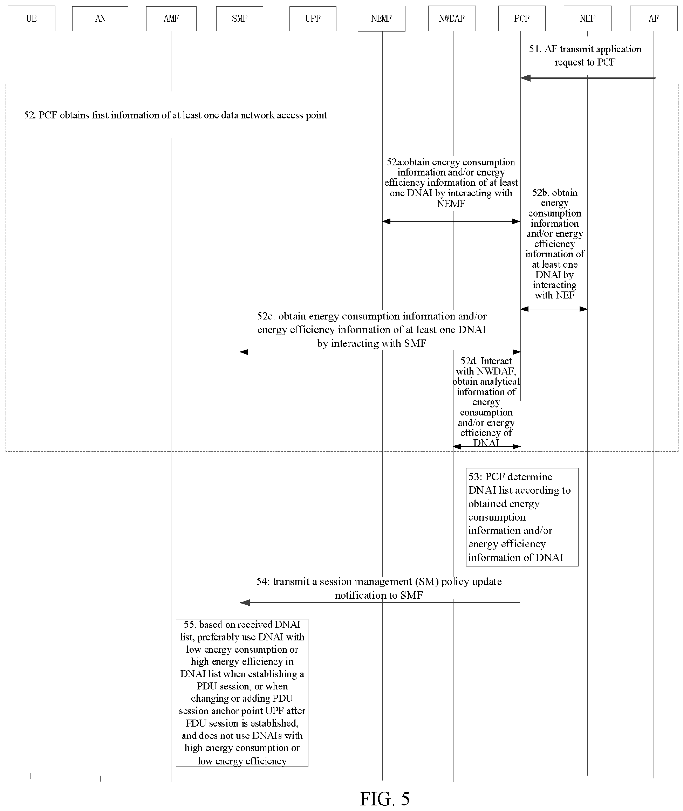

As shown in FIG. 5, one specific implementation process includes:
Step 51: AF transmits an application request to PCF directly or through NEF (or UDR).

The application request carries application identifier, traffic filtering information, UE identifier or UE group identifier, DNN, DNAI list (including one or more DNAIs), S-NSSAI and other information to guide the transmission of applications/services.

Step 52: the PCF obtains first information of at least one data network access.

Specifically, the PCF obtains the energy consumption information and/or energy efficiency information of the DNAI from the NF (e.g., NEMF, NEF, or SMF), or obtains the analytical information (e.g., statistical information or prediction information) of the energy consumption and/or energy efficiency of the DNAI from the NWDAF.

It is to be noted that PCF obtains energy consumption information and/or energy efficiency information of DNAI from NF (such as NEMF, NEF or SMF) based on the DNAI list or DNN carried in the application request, or obtains analytical information of energy consumption and/or energy efficiency of DNAI from NWDAF.

Step 52a: the PCF obtains energy consumption information and/or energy efficiency information of at least one DNAI by interacting with the NEMF.

Step 52b: the PCF obtains energy consumption information and/or energy efficiency information of at least one DNAI by interacting with the NEF.

Step 52c: the PCF obtains energy consumption information and/or energy efficiency information of at least one DNAI by interacting with SMF.

Specifically, based on the DNAI list (or DNN) carried in the AF request, the PCF selects one or more SMFs capable of serving one or more DNAIs in the DNAI list (or serving the DNN), and requests for the energy consumption information and/or energy efficiency information of the DNAI from the selected SMF. The request message carries one or more DNAIs in the DNAI list, which is used to indicate a request/subscription to the energy consumption information and/or energy efficiency information of the network accessing a specified DNAI; or carries a DNN, which is used to indicate a request/subscription to the energy consumption information and/or energy efficiency information of one or more DNAIs of the DNN for the network to access.

The SMF replies/reports to PCF, the energy consumption information and/or energy efficiency information of the network accessing DNAI. The energy consumption information and/or energy efficiency information of the network accessing DNAI reported by SMF here may include: energy consumption information and/or energy efficiency information of the SMF serving the DNAI, and/or the energy consumption information and/or energy efficiency information of the UPF accessing the DNAI.

Specifically, when the SMF receives a request for energy consumption information and/or energy efficiency information of DNAI from the PCF, the SMF can request/subscribe to the UPF for the energy consumption information and/or energy efficiency information of the corresponding DNAI; and then reply/report to the PCF, the energy consumption information and/or energy efficiency information of the network accessing DNAI, based on the UPF's reply/report and energy consumption information and/or energy efficiency information of the SMF serving the DNAI.

Step 52d: the PCF obtains analytical information of energy consumption and/or energy efficiency of DNAI by interacting with NWDAF.

Step 53: the PCF determines a DNAI list according to the obtained energy consumption information and/or energy efficiency information of DNAI.

Specifically, based on the DNAI energy consumption information and/or energy efficiency information provided by the NF (such as NEMF, NEF or SMF), or the DNAI energy consumption analytical information provided by the NWDAF, the PCF determines a list of DNAIs with low energy consumption or high energy efficiency, which includes one or more DNAIs; or, determines the energy consumption information and/or energy efficiency information of each DNAI in the DNAI list.

Step 54: the PCF transmits a session management (SM) policy update notification to SMF.

The session management policy update notification carries a DNAI list, or a DNAI list and energy consumption information or energy efficiency information corresponding to each DNAI in the DNAI list, such as energy consumption level or energy efficiency level. It is to be noted that, in some embodiments, the application request also carries other parameters in the application request in the step 51 (i.e., excluding the DNAI list).

Step 55 is the same as the step 36 in the application scenario 1.

Application scenario 4: the first network function is SMF.

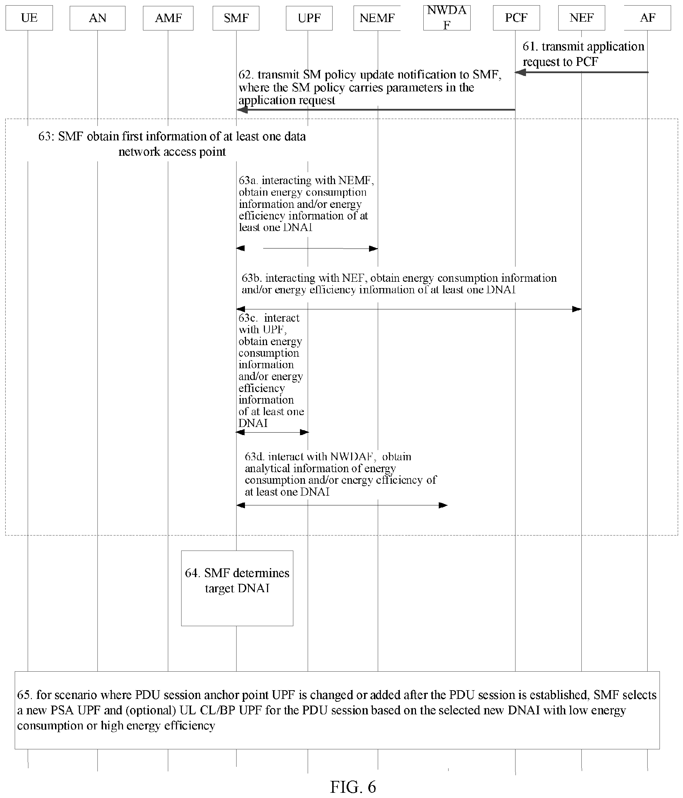

As shown in FIG. 6, one specific implementation process includes:
Step 61: AF transmits an application request to PCF directly or through NEF (or UDR).

The application request carries application identifier, traffic filtering information, UE identifier or UE group identifier, DNN, DNAI list (including one or more DNAIs), S-NSSAI and other information to guide the transmission of applications/services.

Step 62: the PCF transmits a session management (SM) policy update notification to SMF, where the session management (SM) policy carries parameters in the application request.

Step 63: the SMF obtains first information of at least one data network access.
Specifically, the SMF obtains energy consumption information and/or energy efficiency information of DNAI from NF (such as NEMF, NEF or UPF), or obtains analytical information (such as statistical information or prediction information) of energy consumption and/or energy efficiency of DNAI from NWDAF;
Specifically, the SMF obtains energy consumption information and/or energy efficiency information of DNAI from NF (such as NEMF, NEF or UPF) based on the DNAI list or DNN in the session management (SM) policy, or obtains analytical information of energy consumption and/or energy efficiency of DNAI from NWDAF.

Specifically, it may include one of the following steps:
Step 63a: the SMF obtains energy consumption information and/or energy efficiency information of at least one DNAI by interacting with NEMF.
Step 63b: the SMF obtains energy consumption information and/or energy efficiency information of at least one DNAI by interacting with NEF.
Step 63c: the SMF obtains energy consumption information and/or energy efficiency information of at least one DNAI by interacting with UPF.

Specifically, based on the DNAI list (or DNN) in the session management (SM) policy, the SMF selects one or more UPFs capable of serving one or more DNAIs in the DNAI list (or serving the DNN), and requests for the energy consumption information and/or energy efficiency information of the DNAI from the selected UPF. For example, a first message is transmitted, where the first message carries one or more DNAIs in the DNAI list, which is used to indicate a request/subscription to the energy consumption information and/or energy efficiency information of the network accessing a specified DNAI; or carries a DNN, which is used to indicate a request/subscription to the energy consumption information and/or energy efficiency information of one or more DNAIs of the DNN for the network to access.

The UPF replies/reports to SMF, the energy consumption information and/or energy efficiency information of the network accessing DNAI. Specifically, UPF receives the request for energy consumption information and/or energy efficiency information of DNAI from SMF, measures an energy consumption/energy efficiency of transmitting service data locally to the specified DNAI, or obtains analytical information of energy consumption and/or energy consumption of the specified DNAI from NWDAF, thereby obtaining the energy consumption information and/or energy efficiency information of accessing the specified DNAI, and replies/reports the information to SMF.

Step 63d: the SMF obtains analytical information of energy consumption and/or energy efficiency of at least one DNAI by interacting with NWDAF.

Step 64: SMF determines the target DNAI.

Specifically, based on energy consumption information and/or energy efficiency information, SMF preferably uses DNAI with low energy consumption or high energy efficiency when establishing a PDU session, or when changing or adding the PDU session anchor UPF after the PDU session is established, and does not use DNAI with high energy consumption or low energy efficiency (for example, deleting the PDU session anchor UPF connected to the DNAI).

Step 65: for the scenario where the PDU session anchor UPF is changed or added after the PDU session is established, the SMF selects a new PSA UPF and (optional) UL CL/BP UPF for the PDU session based on the selected new DNAI with low energy consumption or high energy efficiency.

Application scenario 5: analytical information (e.g., statistical information or prediction information) of energy efficiency and/or energy efficiency is obtained from NWDAF.

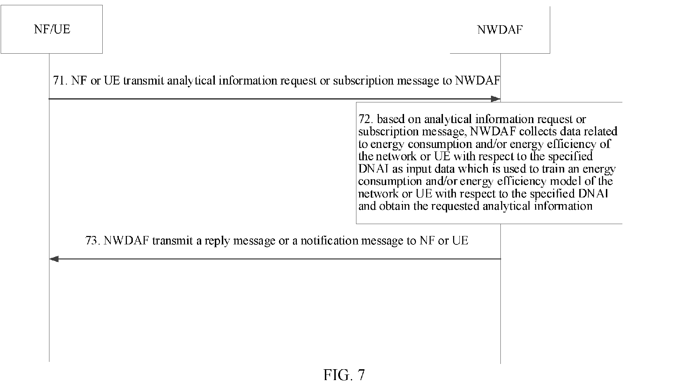

As shown in FIG. 7, one specific implementation process includes:
Step 71: NF or UE transmits an analytical information request or subscription message to NWDAF.

Specifically, the NF can be, for example, AF, NEMF, NEF, PCF, SMF, AMF, UPF, etc.; the analytical information request or subscription message is used to request or subscribe to analytical information of energy efficiency and/or energy efficiency of the network or UE with respect to a specified DNAI.

Specifically, the analytical information request or subscription message carries the following parameters:
H11. analytics ID (/type) which indicates to conduct analysis related to energy efficiency or energy consumption, for example: analytics ID=Energy Efficiency, or analytics ID=Energy Consumption;
H12. target of analytics report: one or more UE identifiers (such as subscription permanent identifier (SUPI)) or UE group identifiers, or "any UE";
H13, analytics filtering information, as shown in Table 1; in particular, the analytics filtering information includes a DNAI, which is used to indicate a request/ subscription to the analytical information of the energy consumption and/or energy efficiency of the network or the UE accessing the specified DNAI; or, the analytics filtering information includes a DNN, which is used to indicate a request/ subscription to the analytical information of the energy consumption and/or energy efficiency of the network or the UE accessing DNAI of the DNN;
H14. analytical accuracy;
H15. target analytical time, which indicates a time range of the requested analytical information;
H16, notification association identifier and notification target address, used to subscribe to analytical information;
H17, reporting thresholds, which can be used for anomaly detection, for example, reporting Thresholds= maximum energy consumption, or maximum energy consumption ratio, or lowest energy efficiency.

**Table 1 analytical filtering information related to energy consumption/energy efficiency**

| information | Description |
|---|---|
| DNN | Data network name, used to indicate analysis of energy consumption/efficiency for a specified data network. |
| DNAI(s) | One or multiple data network access identifiers, used to indicate analysis of energy consumption/efficiency for a specified data network access. |
| Application ID (0...max) | Application Identifier, used to indicate analysis of energy consumption/efficiency for a specified application supported by the network. |
| S-NSSAI | Network slice identifier, used to indicate analysis of energy consumption/efficiency for a specified network slice. |
| NSI ID(s) | Network slice instance identifier(s), used to indicate analysis of energy consumption/efficiency for a specified network slice instance. |
| Area of Interest | Identifier of an area of interest, used to indicate analysis of energy consumption/efficiency for a specified area. It can be represented by a tracking area identifier (TAI), Cell ID, a geographical area (e.g., an area identified by longitude and latitude), or an administrative region, etc. |
| NF Type | Type of network function entity, e.g., access network (AN, such as NG-RAN), AMF, SMF, UPF. It is used to indicate analysis of energy consumption/efficiency for a specified type of network function entity. |
| NF ID | Identifier of network function entity, used to indicate analysis of energy consumption/efficiency for a specified network function entity. |

Step 72: based on the analytical information request or subscription message, NWDAF collects data related to energy consumption and/or energy efficiency of the network or UE with respect to the specified DNAI as input data which is used to train an energy consumption and/or energy efficiency model of the network or UE with respect to the specified DNAI and obtain the requested analytical information.

The NWDAF can collect relevant input data from operation administration and maintenance (OAM), network entity equipment (such as NEMF, access network (AN) (such as next generation radio access network (NG-RAN), AMF, SMF, UPF, etc.) or UE. Specifically, the type and description of the input data are shown in Table 2.

**Table 2 Input data**

| Data | Description |
|---|---|
| Timestamp | The time corresponding to (/associated with) the following data. |
| DNN | Data network name, used to indicate that the following data are energy consumption/efficiency of a specified data network. |
| DNAI | Data network access identifier, used to indicate that the following data are energy consumption/efficiency of a specified data network access. |
| Identifier information | One or more of the following identifiers: |
| | slice identifier; slice instance identifier; NF identifier; UE identifier; service identifier; application identifier. |
| | Based on the above identifiers, the following data are specified slice, slice instance, NF, UE, service, or application using a specified data network or data network access. |
| Number of UEs | The number of registered UEs. |
| Number of PDU Sessions | The number of established PDU sessions. |
| Number of services or applications | The number of running services or applications. |
| UE location | current location information of UE, e.g., a cell where the UE is located, tracking area, or geographical location (e.g., longitude and latitude information). |
| Energy consumption information | e.g., energy consumption amount, percentage of total energy consumption. |
| Renewable energy consumption information | e.g., renewable energy consumed amount, percentage of renewable energy consumption in the total energy consumption. |
| Average energy consumption per UE | e.g., average energy consumption per UE, percentage of total energy consumption. |
| Average renewable energy consumption per UE | e.g., average renewable energy consumption per UE, percentage of renewable energy consumption in the total energy consumption. |
| Average energy consumption per PDU Session | e.g., average energy consumption per PDU session, percentage of total energy consumption. |
| Average renewable energy Consumption per PDU session | e.g., average renewable energy consumption per PDU session, percentage of renewable energy consumption in the total energy consumption. |
| Average energy consumption per service/application | e.g., average energy consumption per service/application, percentage of total energy consumption. |
| Average renewable energy consumption per service/application | e.g., average renewable energy consumption per service/application, percentage of renewable energy consumption in the total energy consumption. |
| Energy consumption for a specified UE | e.g., energy consumption of a specified UE, percentage of total energy consumption. |
| Renewable energy consumption for a specified UE | e.g., renewable energy consumption of the specified UE, percentage of renewable energy consumption in the total energy consumption. |
| Energy consumption for a specified PDU session | e.g., energy consumption of a specified PDU session, percentage of total energy consumption. |
| Renewable energy consumption for a specified PDU session | e.g., renewable energy consumption of a specified PDU session, percentage of renewable energy consumption in the total energy consumption. |
| Energy consumption for a specified service/application | e.g., energy consumption of a specified service/application, percentage of total energy consumption. |
| Renewable energy consumption for a specified service/application | e.g., renewable energy consumption of a specified service/application, percentage of renewable energy consumption in the total energy consumption. |

It is to be noted that if data is collected for a UE, the input data in Table 2 does not include the number of UEs, average energy consumption information of each user/UE, and average renewable energy consumption information of each user/UE; if data is collected for a PDU session, the input data in Table 2 does not include the number of PDU sessions, average energy consumption information of each PDU session, and average renewable energy consumption information of each PDU session. If data is collected for a service/application, the input data in Table 2 does not include the number of services or applications, a average energy consumption information of each service/application, and average renewable energy consumption information of each service/application.

The NWDAF uses the collected input data to train the energy consumption and/or energy efficiency model of the network or UE with respect to the specified DNAI, and further obtains, based on the trained model and input data, the analytical information of the energy consumption and/or energy efficiency of the network or UE with respect to the specified DNAI.

Specifically, the obtained analytical information of energy consumption and/or energy efficiency of the network or UE with respect to the specified DNAI is shown in Table 3. The analytical information may include: statistical information of energy consumption and/or energy efficiency of the network or UE for the specified DNAI, and/or, prediction information of energy consumption and/or energy efficiency of the network or UE for the specified DNAI.

**Table 3 Analytical information (statistical and/or prediction information)**

| Information | Description |
|---|---|
| Timestamp | The time at which the following information is obtained. |
| DNN | Data network name, used to indicate that the following information is analysis information of energy consumption/efficiency for a specified data network. |
| DNAI | Data network access identifier, used to indicate that the following information is analysis information of energy consumption/efficiency for a specified data network access. |
| NF ID | Network function identifier, indicating that the following analysis information is for a specific NF. |
| S-NSSAI | Slice identifier, indicating that the following analysis information is for a network slice. |
| Network Slice Instance (NSI) ID | Slice instance identifier, indicating that the following analysis information is for a network slice instance. |
| UE ID | UE identifier, indicating that the following analysis information is for a specified UE. |
| PDU Session ID | PDU session identifier, indicating that the following analysis information is for a specified PDU session. |
| Application ID | Application identifier, indicating that the following analysis information is for a specified application. |
| UE location | User equipment location information. |
| Energy consumption information | e.g., total energy consumption, percentage of total energy consumption. |
| Renewable energy consumption information | e.g., renewable energy consumption amount, percentage of renewable energy consumption in the total energy consumption. |
| Average energy consumption per UE | e.g., average energy consumption per UE, percentage of total energy consumption. |
| Average renewable energy consumption per UE | e.g., average renewable energy consumption per UE, percentage of renewable energy consumption in the total energy consumption. |
| Average energy consumption per PDU session | e.g., average energy consumption per PDU session, percentage of total energy consumption. |
| Average renewable energy consumption per PDU session | e.g., average renewable energy consumption per PDU session, percentage of renewable energy consumption in the total energy consumption. |
| Average energy consumption per service/application | e.g., average energy consumption per service/application, percentage of total energy consumption. |
| Average renewable energy consumption per service/application | e.g., average renewable energy consumption per service/application, percentage of renewable energy consumption in the total energy consumption. |
| Confidence level | This parameter is included only when the analysis information is prediction information. Confidence level of the prediction information indicates the probability that the prediction information is accurate (or that a predicted event will occur), e.g., 90%. |

It is to be noted that if the output analytical information is for a specified UE, the analytical information in Table 3 does not include the average energy consumption information of each user/UE and the average renewable energy consumption information of each user/UE. If the output analytical information is for a specified PDU session, the analytical information in Table 3 does not include the average energy consumption information of each PDU session and the average renewable energy consumption information of each PDU session. If the output analytical information is for a specified service/application, the analytical information in Table 3 does not include the average energy consumption information of each service/application and the average renewable energy consumption information of each service/application.

Step 73: the NWDAF transmits a reply message or a notification message to NF or UE.

The reply message or notification message carries analytical information on energy consumption and/or energy efficiency of the network or UE for the specified DNAI.

Application scenario 6: the first network function obtains energy consumption information and/or energy efficiency information from NEMF or NEF.

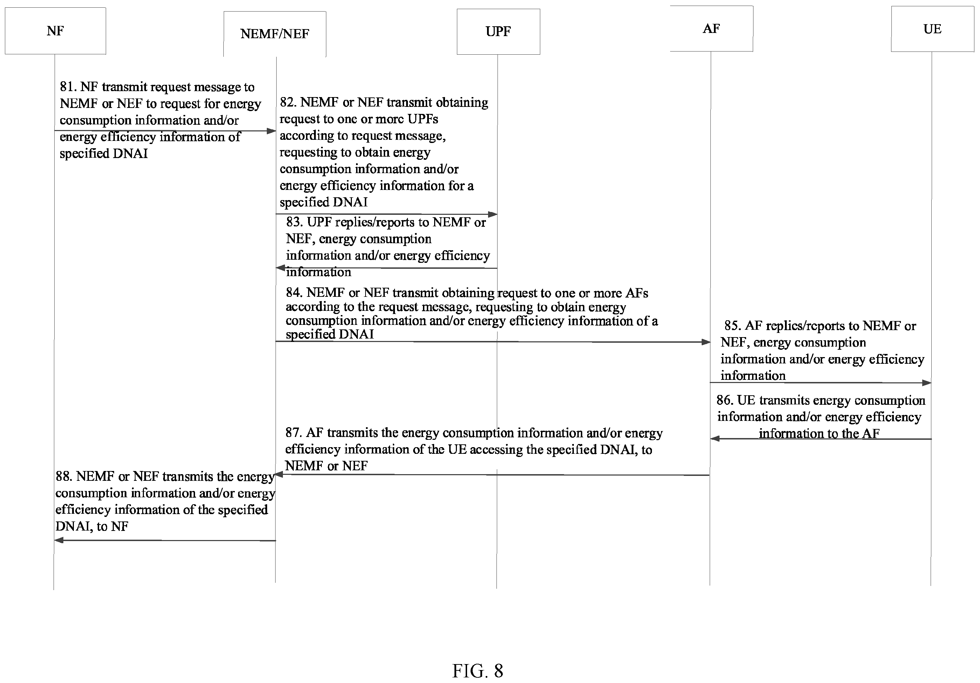

As shown in FIG. 8, one specific implementation process includes:
Step 81: NF transmits a request message to NEMF or NEF to request for energy consumption information and/or energy efficiency information of a specified DNAI.

The NF may be, for example, AF, PCF, SMF, etc.

The request message carries one or more DNAIs, which are used to indicate a request/subscription to energy consumption information and/or energy efficiency information of the network accessing a specified DNAI; or carries a DNN, which is used to indicate a request/subscription for energy consumption information and/or energy efficiency information of one or more DNAIs of this DNN which the network accesses. The request message may also carry one or a combination of the following parameters:
J11. one or more UE identifiers, or UE group identifiers, or one or more UE addresses, used to indicate a request/subscription for energy consumption information and/or energy efficiency information of the network at a specified DNAI in order to transmit service data of one or more specified UEs or a specified UE group;
J12. application or service identifier, or traffic filtering information, used to indicate the request/subscription for the energy consumption information and/or energy efficiency information of the network at the specified DNAI in order to transmit the specified application or service data;
J13. network slice identifier (e.g., S-NSSAI, network slice instance (NSI) identifier), used to indicate a request/subscription for energy consumption information and/or energy efficiency information of the network at a specified DNAI in order to transmit application or service data of a specified network slice (/network slice instance);
J14. UE energy consumption/energy efficiency request indication, used to indicate the energy consumption information and/or energy efficiency information of the requesting UE to transmit application or service data in the specified DNAI.

Step 82: NEMF or NEF transmits an obtaining request to one or more UPFs according to the request message, requesting to obtain energy consumption information and/or energy efficiency information for a specified DNAI.

Specifically, according to the DNAI (or DNN) and other information in the request message, the NEMF or NEF selects one or more UPFs capable of accessing or serving the DNAI (or DNN), and requests the selected UPF for the energy consumption information and/or energy efficiency information of the DNAI. In some embodiments, the obtaining request carries the parameters in step 81 (except for the UE energy consumption/energy efficiency request indication).

Step 83: UPF replies/reports to NEMF or NEF, energy consumption information and/or energy efficiency information.

Specifically, according to the received obtaining request, UPF measures the energy consumption and/or energy efficiency of the local transmission of service data to the specified DNAI, obtains the energy consumption information and/or energy efficiency information of accessing the specified DNAI, and replies/reports to NEMF or NEF, the energy consumption information and/or energy efficiency information. Specifically, examples of information that can be carried in the reply message/report message are as follows:
J21. Energy consumption information and/or energy efficiency information of the network at the specified DNAI;
J22. Energy consumption information and/or energy efficiency information of the network at a specified DNAI in order to transmit service data of one or more specified UEs or a specified UE group;
J23. Energy consumption information and/or energy efficiency information of the network at a specified DNAI in order to transmit specified application or service data;
J24. Energy consumption information and/or energy efficiency information of the network at a specified DNAI in order to transmit application or service data of a specified network slice (/network slice instance);
J25. Energy consumption information and/or energy efficiency information of the network at a specified DNAI in order to transmit specified application or service data of one or more specified UEs or a specified UE group.

If the request message in the step 81 carries a UE energy consumption and/or energy efficiency request indication, the following steps 84 to 87 are executed.

Step 84: NEMF or NEF transmits an obtaining request to one or more AFs according to the request message, requesting to obtain energy consumption information and/or energy efficiency information of a specified DNAI.

Specifically, the NEMF or NEF selects one or more AFs that can support the DNAI (or DNN) according to the information such as the DNAI (or DNN) in the request message, and requests the selected AFs to obtain the energy consumption information and/or energy efficiency information of the UE transmitting the application or service data at the specified DNAI. The obtaining request carries the parameters in the step 81.

Step 85: AF replies/reports to NEMF or NEF, energy consumption information and/or energy efficiency information.

Specifically, based on one or more UE identifiers, UE group identifiers, or one or more UE addresses in the received obtaining request, the AF requests, via the user plane (or application layer), the corresponding UE to provide the energy consumption information and/or energy efficiency information of the UE accessing the specified DNAI. The request message carries one or more DNAIs (or the DNN) received in the step 84, which are used to indicate a request/subscription for the energy consumption information and/or energy efficiency information of the UE accessing the specified DNAI (or one or more DNAIs of the specified DNN).

J31. application or service identifier, or traffic filtering information, used to indicate a request/subscription for the energy consumption information and/or energy efficiency information of the UE at the specified DNAI in order to transmit the specified application or service data.

J33. Network slice identifier (e.g., S-NSSAI, network slice instance (NSI) identifier), used to indicate a request/subscription for energy consumption information and/or energy efficiency information of the UE at the specified DNAI in order to transmit application or service data of the specified network slice (or network slice instance).

Step 86: the UE transmits energy consumption information and/or energy efficiency information to the AF.

Specifically, the UE determines the energy consumption information and/or energy efficiency information of the UE accessing the specified DNAI based on the energy consumption information and/or energy efficiency information of the UE currently accessing the specified DNAI, or the statistical information of the energy consumption and/or energy efficiency of the previous access to the specified DNAI or the prediction information of the energy consumption and/or energy efficiency of the future access to the specified DNAI, and transmits it to the AF through the user plane (or application layer). Specifically, an example of the energy consumption information and/or energy efficiency information of the specified DNAI replied/reported by the UE to the AF is as follows:
J41. Energy consumption information and/or energy efficiency information of UE at the specified DNAI;
J42. Energy consumption information and/or energy efficiency information of the UE at a specified DNAI in order to transmit specified application or service data;
J43. Energy consumption information and/or energy efficiency information of the UE at the specified DNAI in order to transmit application or service data of the specified network slice (or network slice instance);
J44. Energy consumption information and/or energy efficiency information of the UE at the specified DNAI in order to transmit specified application or service data in a specified network slice (or network slice instance).

Step 87: the AF transmits the energy consumption information and/or energy efficiency information of the UE accessing the specified DNAI, to NEMF or NEF.

Step 88: the NEMF or NEF transmits the energy consumption information and/or energy efficiency information of the specified DNAI, to NF.

The information transmitted by NEMF or NEF to NF includes energy consumption information and/or energy efficiency information of the network at the specified DNAI, and/or energy consumption information and/or energy efficiency information of the UE at the specified DNAI.

In summary, according to the solution of the embodiment of the present disclosure, when there are multiple local networks that can be accessed by multiple UEs (that is, there are multiple local network access), DNAI can be selected/updated for the UE's PDU session based on energy consumption and/or energy efficiency requirements of the network or UE, thereby reducing the energy consumption of the network or UE while ensuring the edge computing service experience, and improving the energy efficiency performance of the network or UE.

The technical solution provided by the embodiments of the present disclosure can be applicable to a variety of systems, especially 5G systems. For example, the applicable system can be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, an advanced long term evolution (LTE-A) system, a universal mobile telecommunication system (UMTS), a world-wide interoperability for microwave access (WiMAX) system, a 5G new radio (NR) system, etc. These various systems include UE and network device. The system may also include a core network part, such as an evolved packet system (EPS), a 5G system (5G System, 5GS), etc.

The UE involved in the embodiments of the present disclosure may also be referred to as a terminal, which may be a device that provides voice and/or data connectivity to a user, a handheld device with a wireless connection function, or other processing devices connected to a wireless modem. In different systems, the names of terminal devices may also be different. For example, in a 5G system, a terminal device may be referred to as a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network, such as a personal communication service (PCS) phone, cordless phone, session initiation protocol (SIP) phone, wireless local loop (WLL) station, personal digital assistant (PDA), and other devices. The wireless terminal device may also be referred to as a system, a subscriber unit, a subscriber station, a mobile station, a mobile, a remote station, an access, a remote terminal device, an access terminal device, a user terminal device, a user agent, and a user device, which is not limited in the embodiments of the present disclosure.

In the embodiment of the present disclosure, a terminal communicates with a network function through a network device. The network device may be a base station, which may include multiple cells providing services for the terminal. Depending on the specific application scenario, the base station may also be referred to as an access, or may be a device in an access network that communicates with a wireless terminal device through one or more sectors on an air interface, or may be another name. The network device may be used to interchange received air frames with Internet Protocol (IP) packets, and serve as a router between the wireless terminal device and the rest of the access network, wherein the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolutionary network device (evolutional Node B, eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

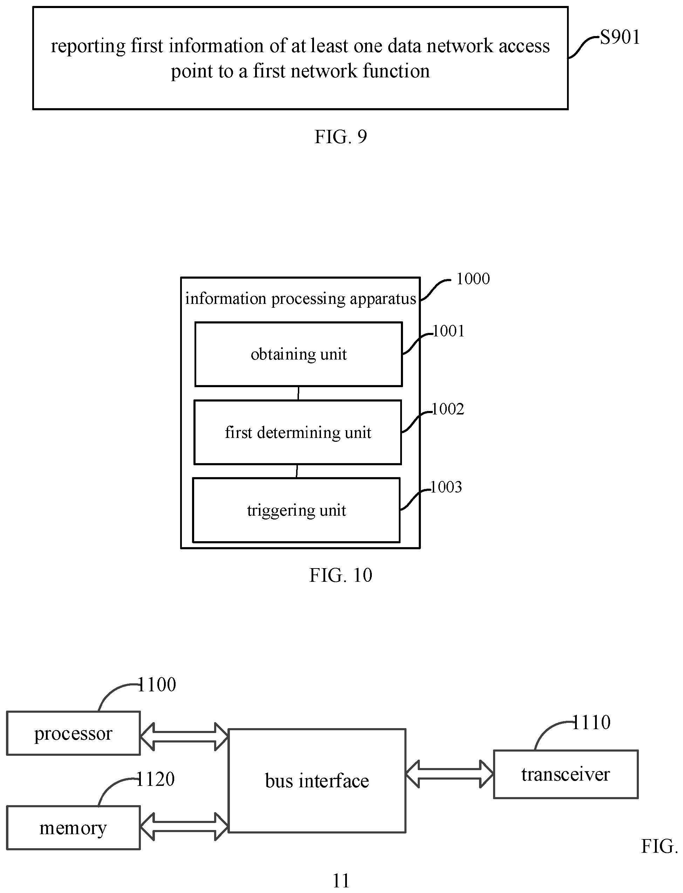

As shown in FIG. 9, one embodiment of the present disclosure provides an information transmission method, which is applied to a user equipment (UE), including:
Step S901: reporting first information of at least one data network access to a first network function; where the first information includes at least one or more of the following: energy consumption information, which includes energy consumption information of the UE using the data network access, and energy efficiency information, which includes energy efficiency information of the UE using the data network access.

In some embodiments, the energy consumption information of the UE using the data network access, includes: energy consumption information of the UE for transmitting data to the data network access;
and/or,
the energy efficiency information of the UE using the data network access, includes: energy efficiency information of the UE for transmitting data to the data network access.

In some embodiments, the energy consumption information or energy efficiency information includes at least one or more of the following:
energy consumption information or energy efficiency information of the UE for transmitting a target PDU session or each PDU session by using the data network access;
energy consumption information or energy efficiency information of the UE for transmitting a target application or each application by using the data network access;
energy consumption information or energy efficiency information of the UE for transmitting data in a target network slice by using the data network access.

In some embodiments, one specific implementation of reporting the first information of at least one data network access to the first network function, includes:
receiving a first message transmitted by the first network function, where the first message is used to request for the first information of the at least one data network access;
according to the first message, reporting the first information of at least one data network access to the first network function.

In some embodiments, the first message carries DNAI of the at least one data network access and restriction information of the first information.

The restriction information of the first information includes at least one or more of the following:
indication information for requesting energy consumption information or energy efficiency information;
indication information for requesting energy consumption information or energy efficiency information regarding a target PDU session, a target UE, a target application, or a target network slice;
indication information for requesting energy consumption information or energy efficiency information for each PDU session, each UE or each application.

It is to be noted that all descriptions about the UE in the above embodiments are applicable to the embodiments of the information transmission method and can achieve the same technical effects, which will not be described in detail here.

As shown in FIG. 10, one embodiment of the present disclosure provides an information processing apparatus 1000, which is applied to a first network function, including:
an obtaining unit 1001 used to obtain first information of at least one data network access; where the first information includes at least one or more of the following: energy consumption information, which includes energy consumption information of the network or UE using the data network access, and energy efficiency information, which includes energy efficiency information of the network or UE using the data network access;
a first determining unit 1002 used to determine data network access information for a protocol data unit (PDU) session according to the first information;
a triggering unit 1003 used to trigger establishment or modification of the PDU session based on the data network access information.

In some embodiments, the trigger unit 1003 is used to:
transmit the data network access information to a second network function, where the data network access information is used to trigger the second network function to establish or modify the PDU session based on the data network access information.

In some embodiments, the data network access information includes:
a data network access identifier DNAI list.

The DNAI list satisfies at least one or more of the following:
energy consumption of a data network access indicated by a DNAI in the DNAI list is less than or equal to a first value;
energy efficiency of a data network access indicated by a DNAI in the DNAI list is greater than or equal to a second value;
data network access indicated by a DNAI in the DNAI list supports a target application.

In some embodiments, the apparatus further includes:
a second determining unit used to determine energy consumption information and/or energy efficiency information of a data network access indicated by each DNAI in the DNAI list.

In some embodiments, the data network access information includes:
target DNAI.

A target data network access corresponding to the target DNAI satisfies at least one or more of the following:
energy consumption of the target data network access is less than or equal to a third value;
energy efficiency of the target data network access is greater than or equal to a fourth value;
energy consumption of the target data network access is less than energy consumptions of data network access corresponding to other DNAIs in the DNAI list except the target DNAI;
energy efficiency of a data network access indicated by the target DNAI is greater than energy efficiencies of data network access corresponding to other DNAIs in the DNAI list except the target DNAI.

In some embodiments, the trigger unit 1003 is used to implement:
triggering to take a UPF capable of accessing the DNAI indicated by the data network access information as an anchor UPF for the PDU session;
triggering change of an anchor UPF of the PDU session, and taking a UPF capable of accessing a DNAI indicated by the data network access information as a new anchor UPF for the PDU session;
triggering to add an anchor UPF for the PDU session, and adding a UPF capable of accessing the DNAI indicated by the data network access information as a new anchor UPF for the PDU session.

In some embodiments, the energy consumption information of the network using the data network access, includes: energy consumption information of a network function that accesses or serves the data network access; and/or,
the energy efficiency information of the network using the data network access, includes: energy efficiency information of a network function that accesses or serves the data network access; and/or,
the energy consumption information of the UE using the data network access, includes: energy consumption information of the UE for transmitting data to the data network access; and/or,
the energy efficiency information of the UE using the data network access, includes: energy efficiency information of the UE for transmitting data to the data network access.

In some embodiments, the energy consumption information or energy efficiency information includes at least one or more of the following:
energy consumption information or energy efficiency information of the network or UE for transmitting a target PDU session or each PDU session by using the data network access;
energy consumption information or energy efficiency information of the network for transmitting data of a target UE or each UE by using the data network access;
energy consumption information or energy efficiency information of the network or UE for transmitting a target application or each application by using the data network access;
energy consumption information or energy efficiency information of the network or UE for transmitting data in a target network slice by using the data network access.

In some embodiments, the energy consumption information includes: statistical information or prediction information of energy consumption; and/or
the energy efficiency information includes: statistical information or prediction information of energy efficiency.

In some embodiments, the obtaining unit 1001 is used to:
obtain the first information of the at least one data network access from a third network function or UE.

The third network function includes at least one or more of the following:
control plane function for accessing or serving the data network access;
user plane function for accessing or serving the data network access;
strategy control function;
network energy management function;
network exposure function;
network data analytics function.

In some embodiments, one specific implementation of obtaining the first information of the at least one data network access from the third network function or UE, includes:
transmitting a first message to the third network function or the UE, where the first message is used to request the first information of the at least one data network access;
receiving a second message from the third network function or the UE, where the second message carries the first information of the at least one data network access.

In some embodiments, the first message carries the DNAI of the at least one data network access and restriction information of the first information.

The restriction information of the first information includes at least one or more of the following:
indication information for requesting energy consumption information or energy efficiency information;
indication information for requesting energy consumption information or energy efficiency information regarding a target PDU session, a target UE, a target application, or a target network slice;
indication information for requesting energy consumption information or energy efficiency information for each PDU session, each UE or each application.

It is to be noted that the apparatus embodiment is an apparatus that corresponds to the above method embodiment in a one-to-one manner. All implementations in the above method embodiment are applicable to the apparatus embodiment and can achieve the same technical effect.

It is to be noted that division of units in the embodiment of the present disclosure is exemplary, and is only a logical function division, and there may be another division manner in actual implementation. In addition, various functional units in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

As shown in FIG. 11, one embodiment of the present disclosure further provides a communication device, which is a first network function, and includes a processor 1100, a transceiver 1110, a memory 1120, and a program stored in the memory 1120 and executable on the processor 1100. The transceiver 1110 is coupled to the processor 1100 and the memory 1120 through a bus interface. The processor 1100 is used to read the program in the memory and execute the following process:
obtaining first information of at least one data network access; where the first information includes at least one or more of the following: energy consumption information, which includes energy consumption information of the network or UE using the data network access, and energy efficiency information, which includes energy efficiency information of the network or UE using the data network access;
determining data network access information for a protocol data unit (PDU) session according to the first information;
triggerring establishment or modification of the PDU session based on the data network access information.

The transceiver 1110 is used to receive and send data under the control of the processor 1100.

In FIG. 11, a bus architecture may include any number of interconnected bus and bridge. Specifically, various circuits of one or more processors, which are represented by the processor 1100, and one or more memories, which are represented by the memory 1120, are linked together. The bus architecture may link various other circuits, such as a peripheral device, voltage regulator and a power management circuit together. These features are well known in this field; therefore, the present disclosure does not make further description on these features. The bus interface provides an interface. The transceiver 1110 may be multiple elements, including a transmitter and a receiver and provide units, which communicate with other devices on the transmission medium. The transmission medium includes wireless channels, wired channels, optical fiber cables, and other types of transmission media.

The processor 1100 is responsible for managing the bus architecture and the normal processing. The memory 1120 may be used to store data used by the processor 1100 for performing operations.

In some embodiments, the processor 1100 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the processor is used to read the computer program in the memory and perform the following operations:
transmitting the data network access information to a second network function, where the data network access information is used to trigger the second network function to establish or modify the PDU session based on the data network access information.

In some embodiments, the data network access information includes:
a data network access identifier DNAI list.

The DNAI list satisfies at least one or more of the following:
energy consumption of a data network access indicated by a DNAI in the DNAI list is less than or equal to a first value;
energy efficiency of a data network access indicated by a DNAI in the DNAI list is greater than or equal to a second value;
data network access indicated by a DNAI in the DNAI list supports a target application.

In some embodiments, the processor is used to read the computer program in the memory and perform the following operations:
determining energy consumption information and/or energy efficiency information of a data network access indicated by each DNAI in the DNAI list.

In some embodiments, the data network access information includes:
target DNAI.

A target data network access corresponding to the target DNAI satisfies at least one or more of the following:
energy consumption of the target data network access is less than or equal to a third value;
energy efficiency of the target data network access is greater than or equal to a fourth value;
energy consumption of the target data network access is less than energy consumptions of data network access corresponding to other DNAIs in the DNAI list except the target DNAI;
energy efficiency of a data network access indicated by the target DNAI is greater than energy efficiencies of data network access corresponding to other DNAIs in the DNAI list except the target DNAI.

In some embodiments, the processor is used to read the computer program in the memory and perform the following operations:
triggering to take a UPF capable of accessing the DNAI indicated by the data network access information as an anchor UPF for the PDU session;
triggering change of an anchor UPF of the PDU session, and taking a UPF capable of accessing a DNAI indicated by the data network access information as a new anchor UPF for the PDU session;
triggering to add an anchor UPF for the PDU session, and adding a UPF capable of accessing the DNAI indicated by the data network access information as a new anchor UPF for the PDU session.

In some embodiments, the energy consumption information of the network using the data network access, includes: energy consumption information of a network function that accesses or serves the data network access; and/or,
the energy efficiency information of the network using the data network access, includes: energy efficiency information of a network function that accesses or serves the data network access; and/or,
the energy consumption information of the UE using the data network access, includes: energy consumption information of the UE for transmitting data to the data network access; and/or,
the energy efficiency information of the UE using the data network access, includes: energy efficiency information of the UE for transmitting data to the data network access.

In some embodiments, the energy consumption information or energy efficiency information includes at least one of the following:
energy consumption information or energy efficiency information of the network or UE for transmitting a target PDU session or each PDU session by using the data network access;
energy consumption information or energy efficiency information of the network for transmitting data of a target UE or each UE by using the data network access;
energy consumption information or energy efficiency information of the network or UE for transmitting a target application or each application by using the data network access;
energy consumption information or energy efficiency information of the network or UE for transmitting data in a target network slice by using the data network access.

In some embodiments, the energy consumption information includes: statistical information or prediction information of energy consumption; and/or
the energy efficiency information includes: statistical information or prediction information of energy efficiency.

In some embodiments, the processor is used to read the computer program in the memory and perform the following operations:
obtaining the first information of the at least one data network access from a third network function or UE.

The third network function includes at least one or more of the following:
control plane function for accessing or serving the data network access;
user plane function for accessing or serving the data network access;
strategy control function;
network energy management function;
network exposure function;
network data analytics function.

In some embodiments, the processor is used to read the computer program in the memory and perform the following operations:
transmitting a first message to the third network function or the UE, where the first message is used to request the first information of the at least one data network access;
receiving a second message from the third network function or the UE, where the second message carries the first information of the at least one data network access.

In some embodiments, the first message carries the DNAI of the at least one data network access and restriction information of the first information.

The restriction information of the first information includes at least one or more of the following:
indication information for requesting energy consumption information or energy efficiency information;
indication information for requesting energy consumption information or energy efficiency information regarding a target PDU session, a target UE, a target application, or a target network slice;
indication information for requesting energy consumption information or energy efficiency information for each PDU session, each UE or each application.

It is to be noted here that the above communication device provided in the embodiment of the present disclosure can implement all the method steps implemented in the above method embodiment, and can achieve the same technical effect. The parts and beneficial effects of this embodiment that are the same as the method embodiment will not be described in detail here.

One embodiment of the present disclosure further provides a computer-readable storage medium, which stores a computer program. When the computer program is executed by the processor, the steps of the information processing method applied to the first network function are implemented. The processor-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

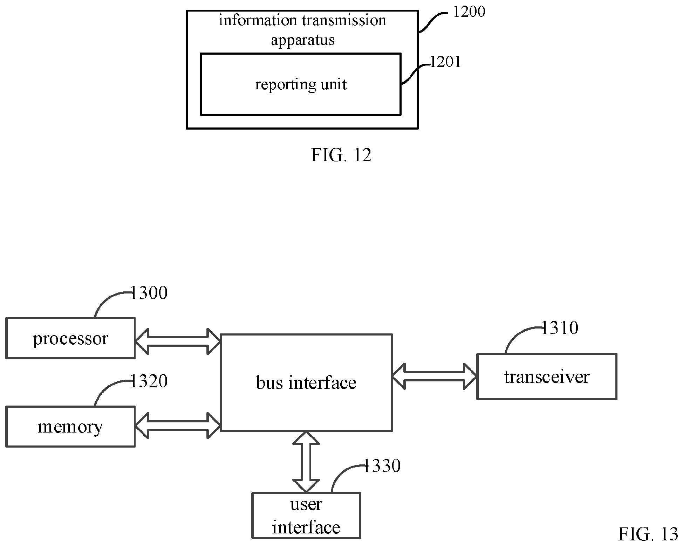

As shown in FIG. 12, one embodiment of the present disclosure provides an information transmission apparatus 1200, which is applied to a UE and includes:
a reporting unit 1201 used to report first information of at least one data network access to a first network function; where the first information includes at least one or more of the following: energy consumption information, which includes energy consumption information of the UE using the data network access, and energy efficiency information, which includes energy efficiency information of the UE using the data network access.

In some embodiments, the energy consumption information of the UE using the data network access, includes: energy consumption information of the UE for transmitting data to the data network access; and/or,
the energy efficiency information of the UE using the data network access, includes: energy efficiency information of the UE for transmitting data to the data network access.

In some embodiments, the energy consumption information or energy efficiency information includes at least one or more of the following:
energy consumption information or energy efficiency information of the UE for transmitting a target PDU session or each PDU session by using the data network access;
energy consumption information or energy efficiency information of the UE for transmitting a target application or each application by using the data network access;
energy consumption information or energy efficiency information of the UE for transmitting data in a target network slice by using the data network access.

In some embodiments, the reporting unit 1201 is used to:
receive a first message transmitted by the first network function, where the first message is used to request for the first information of the at least one data network access;
according to the first message, report the first information of at least one data network access to the first network function.

In some embodiments, the first message carries DNAI of the at least one data network access and restriction information of the first information.

The restriction information of the first information includes at least one or more of the following:
indication information for requesting energy consumption information or energy efficiency information;
indication information for requesting energy consumption information or energy efficiency information regarding a target PDU session, a target UE, a target application, or a target network slice;
indication information for requesting energy consumption information or energy efficiency information for each PDU session, each UE or each application.

It is to be noted that the apparatus embodiment is an apparatus that corresponds to the above method embodiment in a one-to-one manner. All implementation methods in the above method embodiment are applicable to the device embodiment and can achieve the same technical effect.

It is to be noted that division of units in the embodiment of the present disclosure is exemplary, and is only a logical function division, and there may be another division manner in actual implementation. In addition, various functional units in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

As shown in FIG. 13, one embodiment of the present disclosure further provides a communication device, which is a UE, including a processor 1300, a transceiver 1310, a memory 1320, and a program stored in the memory 1320 and executable on the processor 1300. The transceiver 1310 is coupled to the processor 1300 and the memory 1320 through a bus interface. The processor 1300 is used to read the program in the memory and execute the following process:
reporting first information of at least one data network access to a first network function through the transceiver; where the first information includes at least one or more of the following: energy consumption information, which includes energy consumption information of the UE using the data network access, and energy efficiency information, which includes energy efficiency information of the UE using the data network access.

The transceiver 1310 is used to receive and send data under the control of the processor 1300.

In FIG. 13, a bus architecture may include any number of interconnected bus and bridge. Specifically, various circuits of one or more processors, which are represented by the processor 1300, and one or more memories, which are represented by the memory 1320, are linked together. The bus architecture may link various other circuits, such as a peripheral device, voltage regulator and a power management circuit together. These features are well known in this field; therefore, the present disclosure does not make further description on these features. The bus interface provides an interface. The transceiver 1310 may be multiple elements, including a transmitter and a receiver and provide units, which communicate with other devices on the transmission medium. The transmission medium includes wireless channels, wired channels, optical fiber cables, and other types of transmission media. For different UEs, a user interface 1330 may be an interface that can be connected to external or internal devices. The connected devices include but are not limited to a small keyboard, a display, a speaker, a microphone, a joystick, etc.

The processor 1300 is responsible for managing the bus architecture and the normal processing. The memory 1320 may be used to store data used by the processor 1300 for performing operations.

In some embodiments, the processor 1300 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the energy consumption information of the UE using the data network access, includes: energy consumption information of the UE for transmitting data to the data network access;
and/or,
the energy efficiency information of the UE using the data network access, includes: energy efficiency information of the UE for transmitting data to the data network access.

In some embodiments, the energy consumption information or energy efficiency information includes at least one or more of the following:
energy consumption information or energy efficiency information of the UE for transmitting a target PDU session or each PDU session by using the data network access;
energy consumption information or energy efficiency information of the UE for transmitting a target application or each application by using the data network access;
energy consumption information or energy efficiency information of the UE for transmitting data in a target network slice by using the data network access.

In some embodiments, the processor is used to read the program in the memory and execute the following process:
receiving a first message transmitted by the first network function, where the first message is used to request for the first information of the at least one data network access;
according to the first message, reporting the first information of at least one data network access to the first network function.

In some embodiments, the first message carries DNAI of the at least one data network access and restriction information of the first information.

The restriction information of the first information includes at least one or more of the following:
indication information for requesting energy consumption information or energy efficiency information;
indication information for requesting energy consumption information or energy efficiency information regarding a target PDU session, a target UE, a target application, or a target network slice;
indication information for requesting energy consumption information or energy efficiency information for each PDU session, each UE or each application.

At least one embodiment of the present disclosure further provides a communication device, which is a UE, including a memory, a processor, and a computer program stored in the memory and executable on the processor. When the processor executes the program, each process in the information transmission method embodiment applied to the UE is implemented, and the same technical effect can be achieved, which will not be described here to avoid repetition.

At least one embodiment of the present disclosure further provides a computer-readable storage medium on which a computer program is stored. When the program is executed by a processor, each process in the embodiment of the information transmission method applied to the UE as described above is implemented, and the same technical effect can be achieved, which will not be described here to avoid repetition. The computer-readable storage medium is, for example, a read-only memory (ROM), a random access memory (RAM), a magnetic disk or an optical disk.

A person skilled in the art should understand that the embodiments of the present application may be provided as methods, systems, or computer program products. Therefore, the present application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

The present is described with reference to flowcharts and/or block diagrams of methods, devices (systems), and computer program products according to the embodiments of the present application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. An information processing method, performed by a first network function, comprising:
obtaining first information of at least one data network access; wherein the first information comprises at least one or more of the following: energy consumption information, which comprises energy consumption information of a network or user equipment (UE) using the data network access, and energy efficiency information, which comprises energy efficiency information of the network or UE using the data network access;
determining data network access information for a protocol data unit (PDU) session according to the first information; and
triggering establishment or modification of the PDU session based on the data network access information.

2. The method according to claim 1, wherein the triggering establishment or modification of the PDU session based on the data network access information, comprises:
transmitting the data network access information to a second network function, wherein the data network access information is used to trigger the second network function to establish or modify the PDU session based on the data network access information.

3. The method according to claim 1 or 2, wherein the data network access information comprises: DNAI list;
wherein the DNAI list satisfies at least one or more of the following:
energy consumption of a data network access indicated by a DNAI in the DNAI list is less than or equal to a first value;
energy efficiency of a data network access indicated by a DNAI in the DNAI list is greater than or equal to a second value; or,
a data network access indicated by a DNAI in the DNAI list supports a target application.

4. The method according to claim 3, wherein the method further comprises:
determining the energy consumption information and/or energy efficiency information of a data network access indicated by each DNAI in the DNAI list.

5. The method according to claim 1, wherein the data network access information comprises:
a target DNAI;
wherein a target data network access corresponding to the target DNAI satisfies at least one or more of the following:
energy consumption of the target data network access is less than or equal to a third value;
energy efficiency of the target data network access is greater than or equal to a fourth value;
energy consumption of the target data network access is less than energy consumptions of data network access corresponding to other DNAIs in the DNAI list except the target DNAI; or,
energy efficiency of a data network access indicated by the target DNAI is greater than energy efficiencies of data network access corresponding to other DNAIs in the DNAI list except the target DNAI.

6. The method according to claim 1, wherein the triggering establishment or modification of the PDU session based on the data network access information, comprises:
triggering to take a user plane function (UPF) capable of accessing a DNAI indicated by the data network access information as an anchor UPF for the PDU session;
triggering change of an anchor UPF of the PDU session, and taking a UPF capable of accessing a DNAI indicated by the data network access information as a new anchor UPF for the PDU session;
triggering to add an anchor UPF for the PDU session, and adding a UPF capable of accessing a DNAI indicated by the data network access information as a new anchor UPF for the PDU session.

7. The method according to claim 1, wherein the energy consumption information of the network using the data network access, comprises: energy consumption information of a network function that accesses or serves the data network access; and/or,
the energy efficiency information of the network using the data network access, comprises: energy efficiency information of a network function that accesses or serves the data network access; and/or,
the energy consumption information of the UE using the data network access, comprises: energy consumption information of the UE for transmitting data to the data network access; and/or,
the energy efficiency information of the UE using the data network access, comprises: energy efficiency information of the UE for transmitting data to the data network access.

8. The method according to claim 1, wherein the energy consumption information or energy efficiency information comprises at least one or more of the following:
energy consumption information or energy efficiency information of the network or UE for transmitting a target PDU session or each PDU session by using the data network access;
energy consumption information or energy efficiency information of the network for transmitting data of a target UE or each UE by using the data network access;
energy consumption information or energy efficiency information of the network or UE for transmitting a target application or each application by using the data network access; or,
energy consumption information or energy efficiency information of the network or UE for transmitting data in a target network slice by using the data network access.

9. The method according to claim 1, wherein the energy consumption information comprises: statistical information or prediction information of energy consumption; and/or
the energy efficiency information comprises: statistical information or prediction information of energy efficiency.

10. The method according to claim 1, wherein the obtaining first information of at least one data network access, comprises:
obtaining the first information of the at least one data network access from a third network function or the UE;
wherein the third network function comprises at least one or more of the following:
control plane function for accessing or serving the data network access;
user plane function for accessing or serving the data network access;
strategy control function;
network energy management function;
network exposure function; or,
network data analytics function.

11. The method according to claim 10, wherein the obtaining the first information of the at least one data network access from a third network function or the UE, comprises:
transmitting a first message to the third network function or the UE, wherein the first message is used to request the first information of the at least one data network access;
receiving a second message from the third network function or the UE, wherein the second message carries the first information of the at least one data network access.

12. The method according to claim 11, wherein the first message carries DNAI of the at least one data network access and restriction information of the first information;
wherein the restriction information of the first information comprises at least one or more of the following:
indication information for requesting energy consumption information or energy efficiency information;
indication information for requesting energy consumption information or energy efficiency information regarding a target PDU session, a target UE, a target application, or a target network slice;
indication information for requesting energy consumption information or energy efficiency information for each PDU session, each UE or each application.

13. An information transmission method, which is applied to a user equipment (UE), comprising:
reporting first information of at least one data network access to a first network function; wherein the first information comprises at least one or more of the following: energy consumption information, which comprises energy consumption information of the UE using the data network access, and energy efficiency information, which comprises energy efficiency information of the UE using the data network access.

14. The method according to claim 13, wherein the energy consumption information of the UE using the data network access, comprises: energy consumption information of the UE for transmitting data to the data network access;
and/or,
the energy efficiency information of the UE using the data network access, comprises: energy efficiency information of the UE for transmitting data to the data network access.

15. The method according to claim 13, wherein the energy consumption information or energy efficiency information comprises at least one or more of the following:
energy consumption information or energy efficiency information of the UE for transmitting a target protocol data unit (PDU) session or each PDU session by using the data network access;
energy consumption information or energy efficiency information of the UE for transmitting a target application or each application by using the data network access;
energy consumption information or energy efficiency information of the UE for transmitting data in a target network slice by using the data network access.

16. The method according to any one of claims 13 to 15, wherein the reporting the first information of at least one data network access to the first network function, comprises:
receiving a first message transmitted by the first network function, wherein the first message is used to request for the first information of the at least one data network access;
according to the first message, reporting the first information of at least one data network access to the first network function.

17. The method according to claim 16, wherein the first message carries data network access identifier (DNAI) of the at least one data network access and restriction information of the first information;
wherein the restriction information of the first information comprises at least one or more of the following:
indication information for requesting energy consumption information or energy efficiency information;
indication information for requesting energy consumption information or energy efficiency information regarding a target PDU session, a target UE, a target application, or a target network slice;
indication information for requesting energy consumption information or energy efficiency information for each PDU session, each UE or each application.

18. A communication device, which is a first network function, comprising: a memory, a transceiver, and a processor;
wherein the memory is used to store a computer program; the transceiver is used to receive and send data under the control of the processor; the processor is used to read the computer program in the memory and execute the following operations:
obtaining first information of at least one data network access; wherein the first information comprises at least one or more of the following: energy consumption information, which comprises energy consumption information of a network or a user equipment (UE) using the data network access, and energy efficiency information, which comprises energy efficiency information of the network or UE using the data network access;
determining data network access information for a protocol data unit (PDU) session according to the first information;
triggerring establishment or modification of the PDU session based on the data network access information.

19. The device according to claim 18, wherein the processor is used to read the computer program in the memory and execute the following operations:
transmitting the data network access information to a second network function, wherein the data network access information is used to trigger the second network function to establish or modify the PDU session based on the data network access information.

20. The device according to claim 18 or 19, wherein the data network access information comprises: data network access identifier (DNAI) list;
wherein the DNAI list satisfies at least one or more of the following:
energy consumption of a data network access indicated by a DNAI in the DNAI list is less than or equal to a first value;
energy efficiency of a data network access indicated by a DNAI in the DNAI list is greater than or equal to a second value;
data network access indicated by a DNAI in the DNAI list supports a target application.

21. The device according to claim 20, wherein the processor is used to read the computer program in the memory and execute the following operations:
determining energy consumption information and/or energy efficiency information of a data network access indicated by each DNAI in the DNAI list.

22. The device according to claim 18, wherein the data network access information comprises: a target DNAI;
wherein a target data network access corresponding to the target DNAI satisfies at least one or more of the following:
energy consumption of the target data network access is less than or equal to a third value;
energy efficiency of the target data network access is greater than or equal to a fourth value;
energy consumption of the target data network access is less than energy consumptions of data network access corresponding to other DNAIs in the DNAI list except the target DNAI;
energy efficiency of a data network access indicated by the target DNAI is greater than energy efficiencies of data network access corresponding to other DNAIs in the DNAI list except the target DNAI.

23. The device according to claim 18, wherein the processor is used to read the computer program in the memory and execute the following operations:
triggering to take a UPF capable of accessing a DNAI indicated by the data network access information as an anchor UPF for the PDU session;
triggering change of an anchor UPF of the PDU session, and taking a UPF capable of accessing a DNAI indicated by the data network access information as a new anchor UPF for the PDU session;
triggering to add an anchor UPF for the PDU session, and adding a UPF capable of accessing a DNAI indicated by the data network access information as a new anchor UPF for the PDU session.

24. The device according to claim 18, wherein the energy consumption information of the network using the data network access, comprises: energy consumption information of a network function that accesses or serves the data network access; and/or,
the energy efficiency information of the network using the data network access, comprises: energy efficiency information of a network function that accesses or serves the data network access; and/or,
the energy consumption information of the UE using the data network access, comprises: energy consumption information of the UE for transmitting data to the data network access; and/or,
the energy efficiency information of the UE using the data network access, comprises: energy efficiency information of the UE for transmitting data to the data network access.

25. The device according to claim 18, wherein the energy consumption information or energy efficiency information comprises at least one or more of the following:
energy consumption information or energy efficiency information of the network or UE for transmitting a target PDU session or each PDU session by using the data network access;
energy consumption information or energy efficiency information of the network for transmitting data of a target UE or each UE by using the data network access;
energy consumption information or energy efficiency information of the network or UE for transmitting a target application or each application by using the data network access;
energy consumption information or energy efficiency information of the network or UE for transmitting data in a target network slice by using the data network access.

26. The device according to claim 18, wherein the energy consumption information comprises: statistical information or prediction information of energy consumption; and/or
the energy efficiency information comprises: statistical information or prediction information of energy efficiency.

27. The device according to claim 18, wherein the processor is used to read the computer program in the memory and execute the following operations:
obtaining the first information of the at least one data network access from a third network function or the UE;
wherein the third network function comprises at least one or more of the following:
control plane function for accessing or serving the data network access;
user plane function for accessing or serving the data network access;
strategy control function;
network energy management function;
network exposure function;
network data analytic function.

28. The device according to claim 27, wherein the processor is used to read the computer program in the memory and execute the following operations:
transmitting a first message to the third network function or the UE, wherein the first message is used to request the first information of the at least one data network access;
receiving a second message from the third network function or the UE, wherein the second message carries the first information of the at least one data network access.

29. The device according to claim 28, wherein the first message carries DNAI of the at least one data network access and restriction information of the first information;
wherein the restriction information of the first information comprises at least one or more of the following:
indication information for requesting energy consumption information or energy efficiency information;
indication information for requesting energy consumption information or energy efficiency information regarding a target PDU session, a target UE, a target application, or a target network slice;
indication information for requesting energy consumption information or energy efficiency information for each PDU session, each UE or each application.

30. A communication device, which is a user equipment (UE), comprising: a memory, a transceiver, and a processor;
wherein the memory is used to store a computer program; the transceiver is used to receive and send data under the control of the processor; the processor is used to read the computer program in the memory and execute the following operations:
reporting first information of at least one data network access to a first network function; wherein the first information comprises at least one or more of the following: energy consumption information, which comprises energy consumption information of the UE using the data network access, and energy efficiency information, which comprises energy efficiency information of the UE using the data network access.

31. The device according to claim 30, wherein the energy consumption information of the UE using the data network access, comprises: energy consumption information of the UE for transmitting data to the data network access;
and/or,
the energy efficiency information of the UE using the data network access, comprises: energy efficiency information of the UE for transmitting data to the data network access.

32. The device according to claim 30, wherein the energy consumption information or energy efficiency information comprises at least one or more of the following:
energy consumption information or energy efficiency information of the UE for transmitting a target PDU session or each PDU session by using the data network access;
energy consumption information or energy efficiency information of the UE for transmitting a target application or each application by using the data network access;
energy consumption information or energy efficiency information of the UE for transmitting data in a target network slice by using the data network access.

33. The device according to any one of claims 30 to 32, wherein the processor is used to read the computer program in the memory and execute the following operations:
receiving a first message transmitted by the first network function, wherein the first message is used to request for the first information of the at least one data network access;
according to the first message, reporting the first information of at least one data network access to the first network function.

34. The device according to claim 33, wherein the first message carries DNAI of the at least one data network access and restriction information of the first information;
wherein the restriction information of the first information comprises at least one or more of the following:
indication information for requesting energy consumption information or energy efficiency information;
indication information for requesting energy consumption information or energy efficiency information regarding a target PDU session, a target UE, a target application, or a target network slice;
indication information for requesting energy consumption information or energy efficiency information for each PDU session, each UE or each application.

35. An information processing apparatus, which is a first network function, comprising:
an obtaining unit used to obtain first information of at least one data network access; wherein the first information comprises at least one or more of the following: energy consumption information, which comprises energy consumption information of a network or a user equipment (UE) using the data network access, and energy efficiency information, which comprises energy efficiency information of the network or UE using the data network access;
a first determining unit used to determine data network access information for a protocol data unit (PDU) session according to the first information;
a triggering unit used to trigger establishment or modification of the PDU session based on the data network access information.

36. The apparatus according to claim 35, wherein the trigger unit is used to:
transmit the data network access information to a second network function, wherein the data network access information is used to trigger the second network function to establish or modify the PDU session based on the data network access information.

37. The apparatus according to claim 35 or 36, wherein the data network access information comprises: data network access identifier (DNAI) list;
wherein the DNAI list satisfies at least one or more of the following:
energy consumption of a data network access indicated by a DNAI in the DNAI list is less than or equal to a first value;
energy efficiency of a data network access indicated by a DNAI in the DNAI list is greater than or equal to a second value;
data network access indicated by a DNAI in the DNAI list supports a target application.

38. The apparatus according to claim 37, wherein the apparatus further comprises:
a second determining unit used to determine energy consumption information and/or energy efficiency information of a data network access indicated by each DNAI in the DNAI list.

39. The apparatus according to claim 35, wherein the data network access information comprises: a target DNAI;
wherein a target data network access corresponding to the target DNAI satisfies at least one or more of the following:
energy consumption of the target data network access is less than or equal to a third value;
energy efficiency of the target data network access is greater than or equal to a fourth value;
energy consumption of the target data network access is less than energy consumptions of data network access corresponding to other DNAIs in the DNAI list except the target DNAI;
energy efficiency of a data network access indicated by the target DNAI is greater than energy efficiencies of data network access corresponding to other DNAIs in the DNAI list except the target DNAI.

40. The apparatus according to claim 35, wherein the trigger unit is used to implement:
triggering to take a UPF capable of accessing a DNAI indicated by the data network access information as an anchor UPF for the PDU session;
triggering change of an anchor UPF of the PDU session, and taking a UPF capable of accessing a DNAI indicated by the data network access information as a new anchor UPF for the PDU session;
triggering to add an anchor UPF for the PDU session, and adding a UPF capable of accessing a DNAI indicated by the data network access information as a new anchor UPF for the PDU session.

41. The apparatus according to claim 35, wherein the energy consumption information of the network using the data network access, comprises: energy consumption information of a network function that accesses or serves the data network access; and/or,
the energy efficiency information of the network using the data network access, comprises: energy efficiency information of a network function that accesses or serves the data network access; and/or,
the energy consumption information of the UE using the data network access, comprises: energy consumption information of the UE for transmitting data to the data network access; and/or,
the energy efficiency information of the UE using the data network access, comprises: energy efficiency information of the UE for transmitting data to the data network access.

42. The apparatus according to claim 35, wherein the energy consumption information or energy efficiency information comprises at least one or more of the following:
energy consumption information or energy efficiency information of the network or UE for transmitting a target PDU session or each PDU session by using the data network access;
energy consumption information or energy efficiency information of the network for transmitting data of a target UE or each UE by using the data network access;
energy consumption information or energy efficiency information of the network or UE for transmitting a target application or each application by using the data network access;
energy consumption information or energy efficiency information of the network or UE for transmitting data in a target network slice by using the data network access.

43. The apparatus according to claim 35, wherein the energy consumption information comprises: statistical information or prediction information of energy consumption; and/or
the energy efficiency information comprises: statistical information or prediction information of energy efficiency.

44. The apparatus according to claim 35, wherein the obtaining unit is used to:
obtain the first information of the at least one data network access from a third network function or the UE;
wherein the third network function comprises at least one or more of the following:
control plane function for accessing or serving the data network access;
user plane function for accessing or serving the data network access;
strategy control function;
network energy management function;
network exposure function;
network data analytic function.

45. The apparatus according to claim 44, wherein the obtaining the first information of the at least one data network access from the third network function or UE, comprises:
transmitting a first message to the third network function or the UE, wherein the first message is used to request the first information of the at least one data network access;
receiving a second message from the third network function or the UE, wherein the second message carries the first information of the at least one data network access.

46. The apparatus according to claim 45, wherein the first message carries DNAI of the at least one data network access and restriction information of the first information;
wherein the restriction information of the first information comprises at least one or more of the following:
indication information for requesting energy consumption information or energy efficiency information;
indication information for requesting energy consumption information or energy efficiency information regarding a target PDU session, a target UE, a target application, or a target network slice;
indication information for requesting energy consumption information or energy efficiency information for each PDU session, each UE or each application.

47. An information processing apparatus, which is a user equipment (UE), comprising:
a reporting unit used to report first information of at least one data network access to a first network function; wherein the first information comprises at least one or more of the following: energy consumption information, which comprises energy consumption information of the UE using the data network access, and energy efficiency information, which comprises energy efficiency information of the UE using the data network access.

48. The apparatus according to claim 47, wherein the energy consumption information of the UE using the data network access, comprises: energy consumption information of the UE for transmitting data to the data network access;
and,
the energy efficiency information of the UE using the data network access, comprises: energy efficiency information of the UE for transmitting data to the data network access.

49. The apparatus according to claim 47, wherein the energy consumption information or energy efficiency information comprises at least one or more of the following:
energy consumption information or energy efficiency information of the UE for transmitting a target PDU session or each PDU session by using the data network access;
energy consumption information or energy efficiency information of the UE for transmitting a target application or each application by using the data network access;
energy consumption information or energy efficiency information of the UE for transmitting data in a target network slice by using the data network access.

50. The apparatus according to any one of claims 47 to 49, wherein the reporting unit is used to:
receive a first message transmitted by the first network function, wherein the first message is used to request for the first information of the at least one data network access;
according to the first message, report the first information of at least one data network access to the first network function.

51. The apparatus according to claim 50, wherein the first message carries DNAI of the at least one data network access and restriction information of the first information;
wherein the restriction information of the first information comprises at least one or more of the following:
indication information for requesting energy consumption information or energy efficiency information;
indication information for requesting energy consumption information or energy efficiency information regarding a target PDU session, a target UE, a target application, or a target network slice;
indication information for requesting energy consumption information or energy efficiency information for each PDU session, each UE or each application.

52. A processor-readable storage medium, comprising a computer program stored thereon; wherein the computer program is used to cause a processor to execute the method according to any one of claims 1 to 17.
